# EUROPÄISCHE PATENTSCHRIFT

(11) **EP 4 366 975 B1**
(45) Veröffentlichungstag und Bekanntmachung des Hinweises auf die Patenterteilung: **10.09.2025**
(21) Anmeldenummer: 22738483.1
(22) Anmeldetag: 05.07.2022
(51) Int. Cl.: B60L 53/16, B60L 53/22, H01R 27/00, H01R 27/02, B60L 53/30, B60L 50/20

(54) **LADESTATION FÜR E-BIKES**
E-BIKE CHARGING STATION
BORNE DE RECHARGE POUR VÉLOS ÉLECTRIQUES

(30) Priorität: 07.07.2021 DE 102021117559
(43) Veröffentlichungstag der Anmeldung: 15.05.2024
(73) Patentinhaber: ONgineer GmbH, 32339 Espelkamp (DE)
(72) Erfinder: HONERKAMP, Stefan, 49152 Bad Essen (DE); MÜNDEL, Claus-Martin, 32369 Rahden (DE); MÜLLER, Andre, 32369 Rahden (DE); SAAL, Per-Simon, 33613 Bielefeld (DE)
(74) Vertreter: Lippert Stachow Patentanwälte Rechtsanwälte
(86) Internationale Anmeldenummer: PCT/EP2022/068494
(87) Internationale Veröffentlichungsnummer: WO 2023/280796

(56) Entgegenhaltungen:
- CN-U- 206 705 421
- DE-U1- 202012 001 450
- KR-B1- 102 260 438
- US-A1- 2019 135 362

## Beschreibung

Die Erfindung betrifft eine Ladestation zum Laden einer Batterie eines elektrisch angetriebenen Fahrzeugs gemäß dem Oberbegriff von Anspruch 1 sowie ein Verfahren zum Laden einer solchen Batterie mit einer Ladestation.

Aufgrund der zunehmenden Nutzung von elektrisch angetriebenen Fahrzeugen besteht vermehrt Bedarf an Ladestationen zum Aufladen der Batterien solcher Fahrzeuge. Dabei ist vorliegend im Besonderen auf die Fahrzeugklasse von zweirädrigen LEVs (Light Electric Vehicle) abgestellt, wie beispielsweise E-Bikes, d. h. durch einen Elektromotor unterstützt angetriebene Fahrräder, E-Scooter und E-Motorräder umfasst. Aufgrund ihrer gewünschten geringen Größe und ihres gewünschten geringen Gewichts ist für solche elektrisch angetriebenen Fahrzeuge die Bereitstellung von Ladestationen von besonderer Bedeutung, da der Akkukapazität Grenzen gesetzt sind und ein Nutzer der Fahrzeuge darauf angewiesen ist, dass im Rahmen seiner alltäglichen Nutzung ausreichend verteilt Ladestationen bereitstehen, beispielsweise an Restaurants, Supermärkten, Ausflugszielen, etc., damit er sein Fahrzeug uneingeschränkt nutzen kann. Im Besonderen zielt die vorliegende Erfindung auf eine Ladestation zum Laden einer Batterie eines E-Bikes ab, die auf die Größe und üblichen Batterien von E-Bikes ausgerichtet ist.

Im Stand der Technik sind bereits erste Ansätze zur Realisierung solcher Ladestationen bekannt. Als Grundproblem hat sich dabei herausgestellt, dass weder die elektrischen Steckvorrichtungen, die an den Batterien zum Verbinden der Batterie mit einem Ladegerät vorgesehen sind, noch die Ladegeräte selbst einer hinreichend vereinheitlichenden Norm unterliegen. Vielmehr haben die verschiedenen Hersteller der elektrisch betriebenen Fahrzeuge bzw. der Batterien jeweils eigene Stecksysteme und eigene Ladegeräte etabliert, die nicht untereinander kompatibel sind. Daher wird bei üblichen Ladestationen zumeist lediglich eine von außen zugängliche Steckdose in der Nähe eines Ständers für das Fahrzeug bereitgestellt, über die ein Fahrzeugnutzer während des Abstellens seines Fahrzeugs mit seinem eigenen Ladegerät die Batterie seines Fahrzeugs laden kann. Dies bringt jedoch die Nachteile mit sich, dass zum einen der Fahrzeugnutzer sein eigenes Ladegerät mit sich führen muss, was verschiedene Unannehmlichkeiten mit sich bringt, insbesondere auch wegen des zumeist nicht unerheblichen Gewichts und Volumens des Ladegeräts, und dass während des Abstellens des Fahrzeugs das Ladegerät ungeschützt Vandalismus und Diebstahl ausgesetzt ist. Um diesen Nachteilen zu begegnen, wurden vereinzelt auch Ladestationen mit integriertem Ladegerät realisiert, wobei das Ladegerät in einem Schutzschrank zumindest vor Diebstahl, bevorzugt auch vor Vandalismus und Wettereinflüssen, geschützt ist und ein Ladekabel aus dem Schutzschrank führt, an dessen Ende ein Ladestecker vorgesehen ist. Hierdurch kann zwar das Risiko von Diebstahl und Beschädigungen für den Fahrzeugnutzer minimiert werden, doch ist ein solcher Ladestecker üblicherweise nur zu der korrespondierenden Steckvorrichtung von einem bestimmten Batterie- bzw. Fahrzeug-Hersteller kompatibel. Somit muss ein Betreiber der Ladestation eine Vielzahl an unterschiedlichen Ladeboxen mit Ladegerät, Ladekabel und Ladestecker zur Verfügung stellen, was mit einem hohen Herstellungs- und Kostenaufwand einhergeht und was bei auftretendem Vandalismus, beispielsweise einem Durchtrennen von Ladekabeln, mit erheblichen Reparaturkosten einhergeht. In KR 102 260 438 B1 ist eine Ladestation mit einem Ladestecker offenbart, der mehrere Steckeinrichtungen aufweist, die jeweils eine andere Polanordnung aufweisen.

Der vorliegenden Erfindung liegt die Aufgabe zugrunde, eine Ladestation und ein Verfahren zum Laden von Batterien elektrisch angetriebener Fahrzeuge bereitzustellen, mit der bzw. dem zumindest ein Nachteil gattungsgemäßer Ladestationen zumindest teilweise behoben wird.

Als eine Lösung der genannten, der Erfindung zugrundeliegenden Aufgabe schlägt die Erfindung eine Ladestation mit den Merkmalen von Anspruch 1 vor. Die Ladestation ist im Besonderen zum Laden einer Batterie von E-Bikes ausgebildet. Bevorzugt weist die Ladestation Standfüße auf, über die sie in einem öffentlichen Bereich, wie beispielsweise auf Parkplätzen, an Straßen oder sonstigen öffentlichen Plätzen, abstellbar ist, insbesondere dauerhaft installierbar ist, insbesondere nur unter Zerstörung des Untergrunds von diesem gelöst werden kann. Allgemein wird die Ladestation bevorzugt entsprechend auf einem Untergrund in einem öffentlichen Bereich aufgestellt. Die Ladestation ist dazu geeignet, zum Laden der Batterie eine Ladeleistung von mindestens 80 W, insbesondere mindestens 100 W, und einen Ladestrom von mindestens 2 A, insbesondere mindestens 3 A bereitzustellen. Hierdurch kann bei üblichen Batterien ein hinreichend schnelles Aufladen gewährleistet sein. Die Ladestation umfasst einen Schutzschrank und eine Ladeeinrichtung. Die Ladeeinrichtung umfasst ein Ladegerät und ein an das Ladegerät angeschlossenes Ladekabel, das an seinem von dem Ladegerät abgewandten Ende einen Ladestecker zum Anschließen des Ladegeräts an die Batterie zum Laden der Batterie aufweist.

Die Batterie weist entsprechend eine zum Ladestecker korrespondierende Steckvorrichtung auf, in die bzw. auf die der Ladestecker mit seiner Steckeinrichtung lösbar eingesteckt werden kann, gemäß dem bekannten Stecker-Dose-Prinzip. Das Ladegerät ist in einem Innenraum des Schutzschranks angeordnet, und der Schutzschrank weist eine Öffnung auf, durch die das Ladekabel aus dem Innenraum des Schutzschranks austritt, wobei der Ladestecker außerhalb des Innenraums des Schutzschranks angeordnet ist und somit für einen Benutzer von außerhalb des Innenraums des Schutzschranks zugänglich ist. Der Schutzschrank gewährleistet einen Schutz des Ladegeräts, bevorzugt zumindest gegenüber Diebstahl, insbesondere gegenüber Vandalismus und/oder gegenüber Wettereinflüssen. In einer besonders einfachen Ausführungsform ist der Schutzschrank über einen Drahtkörper, beispielsweise einen an das Ladegerät angepassten Drahtbügel oder ein das Ladegerät zumindest abschnittweise umschließendes Drahtnetz, ausgebildet, der so an einem Gegenstand, beispielsweise einer Wandplatte, befestigbar ist, dass er ein Entnehmen des Ladegeräts und somit einen Diebstahl des Ladegeräts verhindert. In jedem Fall definiert der Schutzschrank mit seiner zum Ladegerät gewandten Seite einen Innenraum, in dem das Ladegerät geschützt anordenbar ist, wobei je nach Ausgestaltung und vorgesehener Montage des Schutzschranks der Schutzschrank den Innenraum in allen drei Raumrichtungen an allen seinen Seiten oder nur an manchen seiner Seiten begrenzt. In einer Ausführungsform weist der Schutzschrank ein flächig geschlossenes Gehäuse auf, bevorzugt ist der Schutzschrank kastenartig ausgebildet. Bevorzugt erfüllt der Schutzschrank zumindest die IP-Schutzart IP 20, besonders bevorzugt zumindest IP41, bevorzugt zumindest IP42, bevorzugt zumindest IP43, besonders bevorzugt zumindest IP44. Entsprechend ist die Öffnung bevorzugt an einer Unterseite des Schutzschranks vorgesehen, wenn der Schutzschrank bestimmungsgemäß installiert ist, so dass die Öffnung entlang der auf der Erde wirkenden Gewichtskraft nach unten zur Erde weist, wobei alternativ oder ergänzend in der Öffnung eine wasserdichte Verschraubung, beispielsweise eine PG-Verschraubung eingesetzt sein kann. Bevorzugt ist der Schutzschrank, zumindest sein Gehäuse, aus einem Metall hergestellt. Bevorzugt weist der Schutzschrank eine Zugangstür auf, die mit einem Schloss verschließbar ist oder nur mit codiertem Spezialwerkezug öffenbar ist. Erfindungsgemäß weist der Ladestecker zumindest zwei Steckeinrichtungen auf, die jeweils eine andere Polanordnung aufweisen, wobei das Ladegerät dazu ausgebildet ist, in einem Betriebszustand zumindest wahlweise eine jede der Steckeinrichtungen mit Ladeleistung für einen Ladevorgang zu versorgen und dabei an vorgegebenen Polen der jeweiligen Polanordnung die Ladeleistung auszugeben. Die Polanordnung einer jeden Steckeinrichtung ist die Anordnung ihrer Pole, über die sie elektrische Leistung bzw. elektrische Signale an Pole einer korrespondierenden Steckvorrichtung übertragen kann bzw. von dieser erhalten kann, wenn die Steckeinrichtung bestimmungsgemäß auf die korrespondierende Steckvorrichtung gesteckt ist zum Laden der Batterie. Die Pole bilden somit die elektrischen Kontakte der Steckeinrichtung aus. Das Ladegerät ist dazu ausgebildet, in dem Betriebszustand zumindest genau eine der Steckeinrichtungen mit Ladeleistung für einen Ladevorgang zu versorgen und somit an für die jeweilige Steckeinrichtung vorgegebenen Polen der jeweiligen Polanordnung die Ladeleistung auszugeben, wobei jede der Steckeinrichtungen zur Realisierung des Betriebszustands ausgewählt werden kann. In einer Ausführungsform, in der das Ladegerät dazu ausgebildet ist, nur die Auswahl von genau einer der Steckeinrichtungen zum Laden der Batterie zu ermöglichen, können Querströme und über einen Ladezeitraum hinweg auftretende Schwankungen der an der ausgewählten Steckeinrichtung ausgegebenen Ladeleistung effektiv verhindert sein, ohne dass hierzu ein besonders kostspieliges Ladegerät verwendet zu werden braucht. In manchen Ausführungsformen ist vorgesehen, dass das Ladegerät auch ermöglicht, mehrere der Steckeinrichtungen gleichzeitig in einem Betriebszustand mit Ladeleistung für einen Ladevorgang von jeweils einer Batterie an jeder der ausgewählten Steckeinrichtungen zu versorgen, wobei dann entsprechende Vorkehrungen im Ladegerät zu treffen sind. Das Ladegerät ist somit dazu ausgebildet, in einem Betriebszustand zumindest wahlweise eine jede der Steckeinrichtungen mit Ladeleistung zu versorgen, wobei in einer Ausführungsform im Betriebszustand sämtliche Steckeinrichtungen zum gleichzeitigen Laden einer Batterie an jeder der Steckeinrichtungen versorgt sind und in einer anderen Ausführungsform verschiedene Betriebszustände wählbar sind und je nach gewähltem Betriebszustand eine bestimmte Auswahl der Steckeinrichtungen mit Ladeleistung zum Laden einer Batterie versorgt sind und jede der Steckeinrichtungen als Teil einer solchen Auswahl wählbar ist, wobei eine solche Auswahl eine oder mehrere der Steckeinrichtungen umfassen kann. Das Ladegerät kann mehrere Module umfassen, die über das Ladekabel mit dem Ladestecker verbunden sind, wobei die mehreren Module beispielsweise separat voneinander ausgebildet und in dem Innenraum des Schutzschranks befestigt sind und sämtlich mit dem Ladekabel verbunden sind. Beispielsweise kann das Ladekabel unterschiedliche Gruppen an Leitern umfassen, die mit jeweils einem anderen Modul des Ladegeräts verbunden und in das Ladekabel integriert sind, insbesondere von einer gemeinsamen Kabelhülle ummantelt und durch diese außerhalb des Schutzschranks geschützt sind, oder das Ladegerät kann einen einzigen Ausgangsanschluss umfassen, an den sämtliche Module angeschlossen sind und an dem das Ladekabel angeschlossen ist und von dem aus sich das Ladekabel weg erstreckt. Der Ausgangsanschluss ist bevorzugt der Ausgangsanschluss des einzigen Ausgangsschaltkreises der Ladeeinrichtung bzw. des Ladegeräts. In einer Ausführungsform umfasst das Ladekabel mehrere Gruppen an Leitern, die sämtlich an den Ausgangsanschluss angeschlossen sind, wobei an jeder Gruppe an Leitern jeweils eine andere der Steckeinrichtungen des Ladesteckers angeschlossen und somit durch diese Gruppe an Leitern mit dem Ausgangsanschluss verbunden ist. Allgemein bevorzugt sind die verschiedenen Steckeinrichtungen des Ladesteckers als zueinander bewegliche Teile ausgebildet, wobei insbesondere die Steckeinrichtungen durch Kabelabschnitte miteinander unmittelbar oder mittelbar über den Ausgangsanschluss des Ladegeräts verbunden sind. Allgemein bevorzugt ist der Ladestecker ein zusammenhängendes, von dem Ladekabel unabhängiges Bauteil. In einer besonders bevorzugten Ausführungsform weist das Ladekabel mehrere Leiter auf, die mit mehreren, insbesondere sämtlichen, der Steckeinrichtungen des Ladesteckers verbunden sind und über die beim Ausgeben von Ladeleistung von jeder dieser Steckeinrichtungen jeweils ein elektrisches Signal, insbesondere ein Steuer- bzw. Freischaltesignal oder Ladestrom, fließt, so dass über jeweils einen selben der Leiter das elektrische Signal fließt, wenn über eine beliebige dieser Steckeinrichtungen ein Ladevorgang durchgeführt wird. Besonders bevorzugt weist das Ladegerät genau ein Gehäuse auf, das einen Ausgangsanschluss aufweist, an dem das Ladekabel angeschlossen ist, und das einen Versorgungsanschluss aufweist, an dem ein Versorgungskabel angeschlossen ist, wobei das Gehäuse bevorzugt einen Innenraum des Ladegeräts geschlossen umschließt. Allgemein bevorzugt weist die Ladestation einen Aufnahmebereich zur Aufnahme des Ladesteckers in einem Bereitschaftszustand der Ladestation auf, in dem der Ladestecker geschützt ist, beispielsweise indem er bei einer bestimmungsgemäßen Installation der Ladestation mit ihren Standfüßen auf einem Boden an seiner Oberseite durch einen Abschnitt der Ladestation, insbesondere einen dachartigen Abschnitt der Ladestation bedeckt ist, wodurch ein direktes Auftreffen von Regen auf des Ladestecker verhindert sein kann. Die Ladestation kann im Bereitschaftszustand insbesondere weitere Merkmale aufweisen, die untenstehend mit Bezug auf bevorzugte Ausführungsformen beschrieben sind. Bevorzugt ist der Ladestecker auch in dem Betriebszustand der Ladestation entsprechend bedeckt. Besonders bevorzugt weist das Ladekabel eine Länge von mindestens 1 m, insbesondere mindestens 1,2 m, insbesondere mindestens 1,5 m auf. Dabei ist auf die Länge des Ladekabels vom in dem Schutzschrank angeordneten Ladegerät, d. h. dem Anschluss des Ladegeräts, an dem das Ladekabel angeschlossen ist, bis zum Ladestecker abgestellt. Durch das Vorsehen einer solchen Länge kann der Ladestecker für einen Nutzer besonders einfach handhabbar sein, da ein Nutzer dank der erheblichen Länge des Ladekabels bequem den Ladestecker zu der korrespondierenden Steckvorrichtung an seinem Fahrzeug bzw. an seiner Batterie führen kann.

Die Erfindung bringt im Vergleich zum Stand der Technik wesentliche Vorteile mit sich. Indem der Ladestecker mehrere Steckeinrichtungen aufweist, die jeweils eine andere Polanordnung aufweisen und über die das Ladegerät jeweils in einem Betriebszustand Ladeleistung ausgeben kann, kann mit geringem Kosten- und Installationsaufwand eine Ladestation bereitgestellt werden, die kompatibel mit Batterien einer Vielzahl an Fahrzeugherstellern ist. Besonders bevorzugt weist der Ladestecker zwei, besonders bevorzugt drei, besonders bevorzugt vier unterschiedliche Steckeinrichtungen auf. Besonders bevorzugt weist die Ladestation ein weiteres Ladekabel und einen weiteren Ladestecker auf, wobei das weitere Ladekabel aus der Öffnung oder einer weiteren Öffnung aus dem Schutzschrank austritt und wobei bevorzugt jeder der Ladestecker eine Gruppe an unterschiedlichen Steckeinrichtungen mit unterschiedlichen Polanordnungen aufweist, wobei sich die Gruppen an Steckeinrichtungen der Ladestecker voneinander unterscheiden. Bevorzugt weist jeder der Ladestecker zumindest zwei, insbesondere zumindest drei, insbesondere zumindest vier unterschiedliche Steckeinrichtungen auf. Besonders bevorzugt sind das Ladekabel und das weitere Ladekabel an ein selbes Ladegerät oder an zwei verschiedene Ladegeräte angeschlossen.

In einer Ausführungsform ist die Ladeeinrichtung dazu ausgebildet, vor Beginn des Ladevorgangs an der Polanordnung der jeweiligen Steckeinrichtung ein Freischaltsignal auszugeben. Bevorzugt ist die Ladeeinrichtung ferner dazu ausgebildet, ein Feedback-Signal der an die jeweilige Steckeinrichtung angeschlossenen Batterie auszulesen. Das Feedback-Signal ist bevorzugt ein auf Erhalt des Freischaltesignals von der Batterie an die Ladeeinrichtung ausgesandtes Signal, so dass die Ladeeinrichtung bevorzugt dazu ausgebildet ist, nach Aussenden des Freischaltesignals ein darauf folgendes Feedback-Signal der angeschlossenen Batterie auszulesen. An dieser Stelle sei darauf hingewiesen, dass bei einer Vielzahl an Batterien ein Batteriemanagementsystem (BMS) vorgesehen ist, das den Lade- und Endladevorgang einer Batterie kontrolliert. Zu Sicherheitszwecken ist das BMS üblicherweise so ausgelegt, dass es ein Laden der Batterie und somit ein Beaufschlagen der in der Batterie enthaltenen Akkumulatorblöcke nur dann zulässt, wenn ein vorgegebenes Freischaltesignal erhalten wurde bzw. wird. Ein solches Freischaltesignal kann beispielsweise darin bestehen, dass ein bestimmter Pol der an der Batterie vorgesehenen Steckeinrichtung auf Masse gelegt wird oder auf einen bestimmten Pol der Steckeinrichtung der Batterie eine vorgegebene Spannung aufgebracht wird, oftmals eine Spannung von 5 V gegenüber dem Nullleiter-Pol der Steckeinrichtung, oder dass zwei Pole der Steckeinrichtung der Batterie miteinander kurzgeschlossen werden. Je nach Hersteller der Batterie können unterschiedliche Freischaltesignale vorgesehen sein, die ein BMS erfordert, damit ein Ladevorgang ermöglicht ist. Die Erfinder haben als besonders vorteilhaft erkannt, dass die Ladeeinrichtung, die mehrere Steckeinrichtungen aufweist, die zu unterschiedlichen korrespondierenden Steckvorrichtungen unterschiedlicher Batterien kompatibel sind, zum Aussenden von zumindest einem Freischaltesignal ausgebildet ist, das somit mit einer bestimmten Belegung der Pole der Polanordnung der jeweiligen Steckeinrichtung einhergeht, beispielsweise mit einem Kurzschluss bestimmter Pole der jeweiligen Polanordnung oder dem Ausgeben eines bestimmten Potentials zwischen zwei Polen der Polanordnung und/oder dem Erzeugen eines vorgegebenen Stromflusses zwischen zwei Polen der Polanordnung und/oder zum Ausgeben eines vorgegebenen zeitabhängigen elektrischen Signals zwischen Polen der Polanordnung. Indem das Freischaltesignal vor Beginn des Ladevorgangs und somit vor dem Ausgeben der Ladeleistung zum Laden einer Batterie ausgegeben wird, kann durch das Freischaltesignal die Batterie zum Empfang der Ladeleistung freigeschaltet werden, wobei das Freischaltesignal insbesondere während des Ladevorgangs aufrechterhalten werden kann. In einer Ausführungsform weist das Ladegerät einen einzigen Ausgangsschaltkreis auf, an dessen Ausgangsanschluss das Ladekabel angeschlossen ist, wobei die Ladeeinrichtung dazu ausgebildet ist, an dem Ausgangsanschluss zumindest ein Freischaltesignal auszugeben, das über das Ladekabel entsprechend seiner Verdrahtung mit den Polen der unterschiedlichen Polanordnungen der unterschiedlichen Steckeinrichtungen in eine entsprechende Beaufschlagung der Pole der Polanordnungen umgesetzt wird. Die erfindungsgemäße Ladestation ermöglicht es somit, auch bei Ausgeben von einem Freischaltesignal durch dessen Übersetzung an unterschiedliche Steckeinrichtungen sämtliche BMS unterschiedlicher Batterien, die an die verschiedenen Steckeinrichtungen angeschlossen werden können, zum Laden der jeweiligen Batterie freizuschalten, die jeweils auf dasselbe Freischaltesignal, jedoch umgesetzt an ihren jeweiligen Polen ihrer jeweiligen Steckvorrichtungen, ein Laden ermöglichen. Besonders bevorzugt ist das Ladegerät dazu ausgebildet, nach oder während des Aussendens des Freischaltesignals ein Feedback-Signal von der angeschlossenen Batterie auszulesen. Das Feedback-Signal kann beispielsweise die Ausgabe der aktuell in der Batterie vorliegenden Batteriespannung umfassen. Besonders bevorzugt umfasst das Ladegerät eine Steuereinrichtung, die nach oder während des Ausgebens des Freischaltesignals das Feedback-Signal auswertet und nach Erhalt eines erwarteten Feedback-Signals den Ladevorgang initiiert, d. h. Ladeleistung an der jeweils angeschlossenen Steckeinrichtung ausgibt. In einer besonders bevorzugten Ausführungsform ist das Ladegerät bzw. die Steuereinrichtung des Ladegeräts, dazu ausgebildet, unterschiedliche Feedback-Signale auszugeben. Bei dieser besonders bevorzugten Ausführungsform kann die Tatsache berücksichtigt werden, dass unterschiedliche Batteriehersteller unterschiedliche Freigabesignale vorsehen, über die die Batterie zum Laden freigegeben werden kann. Somit kann die Ladeeinrichtung das Laden unterschiedlichster Batterien gewährleisten, die mit jeweils unterschiedlichen Steckeinrichtungen kompatibel sind. Besonders bevorzugt ist die Ladeeinrichtung bzw. ihre Steuereinrichtung dazu ausgebildet, unterschiedliche Freischaltesignale hintereinander auszusenden und während oder nach dem Aussenden eines jeden Freischaltesignals zu prüfen, ob ein Feedback-Signal von der Batterie empfangen wird, das ein Laden der Batterie ermöglicht, wobei im Falle eines Ausbleibens des Empfangens eines solchen Feedback-Signals mit dem Aussenden eines anderen Freischaltesignals fortgefahren wird und dies solange durchgeführt wird, bis ein Feedback-Signal von der Batterie empfangen wird, das ein Laden der Batterie ermöglicht und das somit einem von der Steuereinrichtung erwarteten Feedback-Signal entspricht. Beispielsweise kann das erwartete Feedback-Signal ein Spannungssignal in einem vorgegebenen Spannungsbereich sein, beispielsweise zwischen 30 % und 200 %, insbesondere zwischen 50 % und 150 %, einer erwarteten Nennspannung, wobei die erwartete Nennspannung beispielsweise im Ladegerät abgelegt sein kann, beispielsweise 36 V oder 48 V betragen kann. Das Feedback-Signal der Batterie signalisiert der Ladeeinrichtung somit, dass die Batterie freigeschaltet ist und ein Laden ermöglicht ist. In einer Ausführungsform sind in der Steuereinrichtung der Ladeeinrichtung Paare an Freischaltesignal und Feedback-Signal abgelegt, wobei die Ladeeinrichtung dazu ausgebildet ist, jeweils ein bestimmtes der in der Steuereinrichtung abgelegten Feedback-Signale auszugeben und zu prüfen, ob das erwartete Freischaltesignal empfangen wird, und bei Nicht-Empfangen des erwarteten Feedback-Signals mit dem Aussenden des nächsten abgelegten Freischaltesignals fortzufahren, bis ein solches Freischaltesignal ausgesandt wurde bzw. wird, auf das die Batterie hin das erwartete Feedback-Signal aussendet. Das Feedback-Signal kann beispielsweise von der Nennspannung der Batterie abhängig sein, insbesondere auch von der aktuellen Batteriespannung der Batterie. Die Steuereinrichtung kann somit bevorzugt so ausgebildet sein, dass sie als auf Aussenden des Freischaltesignals erwartetes Feedback-Signal eine Auswahl an unterschiedlichen Feedback-Signalen zulässt und bei Empfang eines jeden Feedback-Signals der Auswahl an Feedback-Signalen den Ladevorgang startet, d. h. Ladeleistung an der Polanordnung der mit der Batterie verbundenen Steckeinrichtung ausgibt.

Erfindungsgemäß weist die Ladeeinrichtung eine Sicherungseinrichtung auf, die dazu ausgebildet ist, bei Anschließen einer bestimmten der Steckeinrichtungen an die Batterie zur Versorgung der Batterie mit der Ladeleistung eine Ausgabe von weiterer Ladeleistung an jedwede andere der Steckeinrichtungen zu verhindern und/oder bei Anschließen mehrerer der Steckeinrichtungen an jeweils eine ihnen zugeordnete Batterie zum Versorgen der jeweils zugeordneten Batterie mit Ladeleistung eine zwischen den Steckeinrichtungen fließende Leistung zu verhindern. Bei einer bevorzugten Ausführungsform stellt die Ladeeinrichtung somit sicher, dass stets nur über eine ihrer Steckeinrichtungen Ladeleistung zum Laden einer Batterie ausgegeben wird, so dass nicht an zwei Steckeinrichtungen gleichzeitig Ladeleistung zum gleichzeitigen Laden von zweien an den beiden Steckeinrichtungen angeschlossenen Batterien ausgegeben wird. Die Sicherungseinrichtung kann beispielsweise eine oder mehrere elektronische Komponenten umfassen, die einen Stromfluss zwischen zwei Steckeinrichtungen auf einen Maximalwert begrenzt. Der Maximalwert liegt bevorzugt unter 500 mA, insbesondere unter 100 mA, insbesondere bei null. Als besonders vorteilhaft hat sich herausgestellt, die Sicherungseinrichtung zumindest teilweise in den unten näher erläuterten Verteiler des Ladesteckers zu integrieren. Hierdurch kann durch eine besonders einfache elektronische Komponente ein Fließen von Ladeleistung zwischen zweien der Steckeinrichtungen verhindert sein. Durch das Vorsehen der Sicherungseinrichtung kann somit effektiv verhindert sein, dass auch bei dem Anschließen von zwei Batterien mit sehr unterschiedlichen Ladezuständen an zwei unterschiedliche Steckeinrichtungen des Ladesteckers praktisch keine Ströme zwischen den Batterien fließen können. Allgemein bevorzugt ist die Sicherungseinrichtung dazu ausgebildet, die Gesamtleistung bzw. den Gesamtstrom, die bzw. der über den Ladestecker, d. h. über sämtliche Steckeinrichtungen des Ladesteckers, abgegeben werden kann, auf einen Maximalwert zu begrenzen. Dies kann durch eine separate elektronische Komponente der Sicherungseinrichtung vorgesehen sein. Diese elektronische Komponente kann beispielsweise in das Ladegerät integriert sein, insbesondere in den Ausgangsschaltkreis des Ladegeräts. Als Maximalwert kann für die Gesamtleistung beispielsweise ein Wert von maximal 500 W, insbesondere maximal 300 W, insbesondere maximal 200 W vorgesehen sein bzw. für den Gesamtstrom ein Wert von maximal 10 A, insbesondere 8 A, insbesondre maximal 6 A vorgesehen sein.

Durch das Vorsehen einer solchen Sicherungseinrichtung können hohe Ladestrompeaks, die zu einer Beschädigung des Ladegeräts führen können, nach Möglichkeit verhindert sein, und auch das Fließen von Querströmen zwischen unterschiedlichen Batterien, die an unterschiedlichen Steckeinrichtungen angeschlossen sind, kann effektiv verhindert sein. Allgemein bevorzugt ist die Sicherheitseinrichtung zumindest teilweise in dem Ladestecker integriert, insbesondere von dem Ladestecker umfasst. Die Sicherungseinrichtung kann beispielsweise über eine elektronische Schaltung in der Ladeeinrichtung ausgebildet sein, die die Ausgabe von Ladeleistung an nur eine Steckeinrichtung sicherstellt. Beispielsweise kann die elektronische Schaltung in das Ladegerät selbstschaltend integriert sein oder einen mechanischen, insbesondere am Ladestecker vorgesehenen, von einem Nutzer per Hand betätigbaren Wahlschalter umfassen, mit dem eine bestimmte Steckeinrichtung wählbar ist, über die Ladeleistung zum Laden der Batterie ausgegeben werden soll. Die Sicherungseinrichtung kann jedoch auch alternativ oder ergänzend eine mechanische Komponente umfassen, die mit der Einsteckbarkeit der Steckeinrichtungen gekoppelt ist und die bei Einstecken einer bestimmten der Steckeinrichtungen in eine korrespondierende Steckvorrichtung der angeschlossenen Batterie das Ausgeben von Ladeleistung an den übrigen Steckeinrichtungen verhindert, beispielsweise indem sie ein Zusammenstecken der übrigen Steckeinrichtungen mit korrespondierenden Steckvorrichtungen verhindert, beispielsweise durch Verdecken des zum Zusammenstecken vorgesehenen Steckendes der Steckeinrichtungen. Dabei ist zu berücksichtigen, dass sich die Steckeinrichtungen jeweils über eine Stecklänge erstrecken, über die hinweg sie mit einer ihnen zugeordneten, kompatiblen Steckvorrichtung in Eingriff zu bringen sind, wenn eine Steckverbindung zwischen Steckeinrichtung und kompatibler Steckvorrichtung hergestellt wird, mit der die Pole von Steckeinrichtung und Steckvorrichtung miteinander in leitenden Kontakt gebracht werden. Die Sicherungseinrichtung kann somit eine mechanische Komponente der Ladeeinrichtung umfassen oder sein, die bei einem Einstecken einer bestimmten Steckeinrichtung über ihre Stecklänge hinweg in die korrespondierende Steckvorrichtung über eine Weglänge verschoben wird, die von der Stecklänge abhängt, so dass über die erwartete Stecklänge einer jeden Steckeinrichtung der Verschiebeweg der mechanischen Komponente vorbekannt ist und somit über die Sicherungseinrichtung eine präzise Schaltung vorgenommen werden kann, die das Ausgeben von Ladeleistung an den übrigen Steckeinrichtungen verhindert.

Besonders bevorzugt ist die Sicherungseinrichtung zumindest teilweise, insbesondere vollständig, als zu den Steckeinrichtungen bewegliches Bauteil, das insbesondere die beschriebene mechanische Komponente ausbildet, in den Ladestecker integriert und zu jeder der Steckeinrichtungen in eine erste Position bringbar, in der sie die jeweilige Steckeinrichtung zumindest teilweise verdeckt, und in eine zweite Position bringbar, wobei sie in der zweiten Position die jeweilige Steckeinrichtung freigibt und dabei die übrigen Steckeinrichtungen zumindest teilweise verdeckt und deren Freigabe verhindert und/oder wobei sie in der zweiten Position durch elektrische Schaltung die Ausgabe von Ladeleistung an den Polen der übrigen Steckeinrichtungen verhindert. Das bewegliche Bauteil kann einstückig ausgebildet sein oder zueinander bewegliche Bauteilelemente umfassen. Das Bauteil ist zu jeder der Steckeinrichtungen in eine der jeweiligen Steckeinrichtung zugeordnete erste Position und in eine der jeweiligen Steckeinrichtung zugeordnete zweite Position bringbar. In der ersten Position, bezogen auf die jeweilige Steckeinrichtung, verhindert sie das Zusammenstecken der Steckeinrichtung mit einer korrespondierenden Steckvorrichtung. Das Bauteil verdeckt in der ersten Position die jeweilige Steckeinrichtung zumindest teilweise, insbesondere zumindest auf Höhe des Steckendes der jeweiligen Steckeinrichtung, insbesondere ausgehend von dem Steckende entlang der Stecklänge, über die die jeweilige Steckeinrichtung bestimmungsgemäß mit einer korrespondierenden Steckvorrichtung in Eingriff zu bringen ist. Mit dem Steckende wird die Steckeinrichtung bestimmungsgemäß mit einer korrespondierenden Steckvorrichtung zusammengesteckt. In der zweiten Position gibt das Bauteil die jeweilige Steckeinrichtung zumindest ausgehend von ihrem jeweiligen Steckende über ihre Stecklänge so frei, dass die Steckeinrichtung in die zu ihr korrespondierende Steckvorrichtung der Batterie über ihre Stecklänge einsteckbar bzw. auf sie aufsteckbar ist. Das Bauteil kann beispielsweise einstückig ausgebildet sein, so dass es sich bei einer Bewegung relativ zu einer der Steckeinrichtungen auch zwingend relativ zu den übrigen Steckeinrichtungen bewegt und somit bei Freigabe einer der Steckeinrichtungen eine vordefinierte Position zu den anderen Steckeinrichtungen einnimmt. In einer anderen Ausführungsform weist das bewegliche Bauteil mehrere zueinander bewegliche Bauteilelemente auf, wobei jedes der Bauteilelemente einer bestimmten Gruppe an Steckeinrichtungen umfassend zumindest eine Steckeinrichtung des Ladesteckers zugeordnet ist und die zueinander beweglichen Bauteilelemente so miteinander gekoppelt sind, dass eine Positionierung eines der Bauteilelemente relativ zu einer der Steckeinrichtungen des Ladesteckers in einer solchen Position, in der die Sicherungseinrichtung die zweite Position relativ zu dieser Steckeinrichtung einnimmt, die übrigen Bauteilelemente auf eine solche Position relativ zu den übrigen Steckeinrichtungen festgelegt sind, in der sie sich jeweils befinden, wenn sich die Sicherungseinrichtung in der ersten Position relativ zu den übrigen Steckeinrichtungen befindet.

In einer Ausführungsform weist die Sicherungseinrichtung mehrere Hülsenabschnitte auf, die jeweils genau einer der Steckeinrichtungen zugeordnet sind. In einer ersten Position der Sicherungseinrichtung zu einer jeden der Steckeinrichtungen umschließt der der jeweiligen Steckeinrichtung zugeordnete Hülsenabschnitt die jeweilige Steckeinrichtung und erstreckt sich axial über die jeweilige Steckeinrichtung hinweg, insbesondere zumindest ausgehend von ihrem jeweiligen Steckende entlang ihrer Stecklänge, besonders bevorzugt axial über das jeweilige Steckende der jeweiligen Steckeinrichtung hinaus. Ausgehend von der ersten Position ist der der jeweiligen Steckeinrichtung zugeordnete Hülsenabschnitt zum Erreichen der zweiten Position der Sicherungseinrichtung mit Bezug auf die jeweilige Steckeinrichtung relativ zu der jeweiligen Steckeinrichtung axial verschiebbar, wobei der jeweilige Hülsenabschnitt sich relativ zu der ihm zugeordneten Steckeinrichtung in der zweiten Position der Sicherungseinrichtung mit Bezug auf die zugeordnete Steckeinrichtung in einer vorgegebenen Position befindet und er in dieser Position die übrigen Hülsenabschnitte auf ihre Relativposition zu den ihnen zugeordneten Steckeinrichtungen festlegt, die sie in der ersten Position der Sicherungseinrichtung, bezogen auf die ihnen jeweils zugeordneten Steckeinrichtungen, innehaben. Die Sicherungseinrichtung kann somit zu jeder Steckeinrichtung die erläuterte erste und zweite Position einnehmen. Die erläuterte erste Position der Sicherungseinrichtung mit Bezug auf eine bestimmte der Steckeinrichtungen geht mit einer ersten Relativposition des zugeordneten Hülsenabschnitts relativ zu der jeweiligen Steckeinrichtung einher, und die zweite Position der Sicherungseinrichtung mit Bezug auf die jeweilige Steckeinrichtung geht mit einer bestimmten zweiten Relativposition des zugeordneten Hülsenabschnitts relativ zu der jeweiligen Steckeinrichtung einher. Die verschiedenen Hülsenabschnitte sind so miteinander gekoppelt, dass immer nur einer der Hülsenabschnitte in seine zweite Relativposition relativ zu der ihm zugeordneten Steckeinrichtung gebracht werden kann und hierdurch die übrigen Hülsenabschnitte auf ihre erste Relativposition relativ zu den ihnen zugeordneten Steckeinrichtungen festgelegt sind. Dies kann beispielsweise durch eine Bewegungszwangskopplung der Hülsenabschnitte zueinander erfolgen, so dass die Bewegung eines der Hülsenabschnitte mit einer definierten Bewegung der übrigen Hülsenabschnitte gekoppelt ist. Die Kopplung der Hülsenabschnitte kann jedoch auch dadurch erfolgen, dass zwischen den Hülsenabschnitten ein Freiraum vorgesehen ist, der von jedem der Hülsenabschnitte besetzt wird, wenn er sich in seiner zweiten Relativposition relativ zu der ihm zugeordneten Steckeinrichtung befindet, wobei durch Besetzen des Freiraums der jeweilige Hülsenabschnitt eine Beweglichkeit der übrigen Hülsenabschnitte zum Erreichen ihrer jeweiligen zweiten Relativposition relativ zu den ihnen zugeordneten Steckeinrichtungen blockiert.

In einer Ausführungsform umfasst die Ladeeinrichtung einen einzigen Ausgangsschaltkreis, an dessen Ausgangsanschluss das Ladekabel angeschlossen ist. Besonders bevorzugt wird zum Ausgeben der Ladeleistung an den Polen von zumindest mehreren der unterschiedlichen Steckeinrichtungen jeweils über dieselben Leiter des Ladekabels elektrische Energie von dem Ausgangsanschluss an die Pole übertragen. Bevorzugt wird zum Ausgeben der Ladeleistung an den Polen sämtlicher unterschiedlichen Steckeinrichtungen des Ladesteckers jeweils über dieselben Leiter des Ladekabels elektrische Energie von dem Ausgangsanschluss an die Pole übertragen. Das Vorsehen von nur einem Ausgangsanschluss, an dem das Ladekabel angeschlossen ist, kann einer kostengünstigen und zuverlässigen Realisierung der Ladeeinrichtung dienlich sein. Denn hierdurch kann die Ausgabe von Ladeleistung auf nur einen Ausgangsanschluss begrenzt sein. Auch können hierdurch die erläuterten Freischaltesignale definiert an dem Ausgangsanschluss ausgegeben werden. Das Ladekabel weist entsprechend bevorzugt mehrere Leiter auf, die an unterschiedliche Steckeinrichtungen angeschlossen sind, so dass die unterschiedlichen Steckeinrichtungen über jeweils denselben dieser Leiter mit dem Ausgangsanschluss verbunden sind. Somit wird über diese selben Leiter jeweils Ladeleistung übertragen, wenn über die jeweiligen unterschiedlichen Steckeinrichtungen jeweils Ladeleistung an eine Batterie abgegeben wird. Dabei kann der Ladestecker einen unten näher erläuterten Verteiler umfassen, wobei die Steckeinrichtungen mittels des Verteilers an die Leiter angeschlossen sind. Allgemein bevorzugt umfasst das Ladekabel drei Leiter, von denen ein erster als Phasenleiter, ein zweiter als Nullleiter und ein dritter als Signalleiter ausgebildet ist, wobei mehrere der Steckeinrichtungen, insbesondere sämtliche Steckeinrichtungen, an die drei Leiter angeschlossen sind. Bevorzugt ist bei dem Anschließen der jeweiligen Steckeinrichtung an die Batterie vorgesehen, dass über den Phasenleiter und den Nullleiter die Ladeleistung an die Batterie ausgegeben wird und über den Signalleiter das Freischaltesignal ausgegeben wird. Bevorzugt sind die drei Leiter die einzigen Leiter des Ladekabels, die mit mehreren, insbesondere jeder, der Steckeinrichtungen des Ladesteckers verbunden sind und diese mit dem Ladegerät verbindet. Bevorzugt weist das Ladekabel nur die drei genannten Leiter auf. Besonders bevorzugt weist das Ladekabel mehrere Leiter auf, die mit einem Ende an jeweils genau einem ihnen zugeordneten Ausgangskontakt des Ausgangs angeschlossen sind und an ihrem anderen Ende an mehreren der Steckeinrichtungen, insbesondere an sämtlichen Steckeinrichtungen angeschlossen sind.

In einer Ausführungsform weist die Ladeeinrichtung eine elektronische Steuereinrichtung zur Festlegung von Ladeparametern auf, die ein im Betriebszustand an den Polen der Polanordnung der jeweiligen Steuereinrichtung ausgebendes Ladepotential festlegen. Die Steuereinrichtung kann zumindest teilweise, insbesondere vollständig, in das Ladegerät integriert sein. Über das Ladepotential kann die Ladespannung und/oder der Ladestrom eingestellt sein. Besonders bevorzugt weist die Steuereinrichtung eine Codierschnittstelle auf, über die durch eine Codierung der Steuereinrichtung zumindest einer der Ladeparameter festlegbar ist. Besonders bevorzugt ist über die Codierschnittstelle ein Wert für einen Ladestrom, ein Nennwert für eine Ladespannung und/oder eine an dem Ladeanschluss ausgegebene Hilfsspannung als Ladeparameter festlegbar. Die Festlegung des Ladeparameters kann beispielsweise absolut erfolgen, indem ein Absolutwert für den Ladeparameter festgelegt ist, oder beispielsweise auch in Abhängigkeit von einem insbesondere zeitabhängigen, in dem Ladegerät gespeicherten Ladeprofil, das Wert und gegebenenfalls Zeitabhängigkeit von Ladeparametern funktional festlegt. Eine absolute Festlegung kann beispielsweise darin bestehen, dass für den Ladeparameter ein vorgegebener Wert festgelegt wird, wobei der Wert zeitlich konstant oder mit der Zeit veränderlich festgelegt sein kann. Eine Festlegung in Abhängigkeit von dem Ladeprofil kann beispielsweise darin bestehen, dass ein Grenzwert festgelegt wird und somit in dem Fall, dass das Ladeprofil einen den Grenzwert übersteigenden Wert vorsieht, dieser Grenzwert anstelle des von dem Ladeprofil vorgesehenen Werts verwendet wird. Die Festlegung des Ladeparameters in Abhängigkeit von dem Ladeprofil kann beispielsweise auch darin bestehen, dass die Festlegung einen Skalierungsfaktor beinhaltet, über die der von dem Ladeprofil vorgegebene Wert skaliert wird. Dies kann beispielsweise vorteilhaft sein, um durch Festlegung des Ladeparameters das Ladeprofil auf ein bestimmtes Batteriesystem, beispielsweise 48 V-System oder 12 V-System, zu skalieren, davon unabhängig jedoch den zeitlichen Verlauf des Werts des Ladeparameters, der durch das Ladeprofil festgelegt wird, beizubehalten. An dieser Stelle sei darauf hingewiesen, dass üblicherweise eine Batterie über ihre nominelle Nennspannung definierbar ist. So bestehen beispielsweise Einordnungen von Batterien in ein 48-Volt-System und 12-Volt-System, wie es dem Fachmann absolut geläufig ist. Grundsätzlich ergibt sich die nominelle Nennspannung eines Batteriesystems üblicherweise aus einem auf den jeweiligen Systemwert "gerundeten" Wert des Ergebnisses, das sich aus einer Multiplikation von 3,6-3,7 V (je nach eingesetztem Akkumulatorblock) mit der Anzahl an Akkumulatorblöcken, die in der Batterie vorgesehen und deren Spannung in der Batterie hintereinander geschaltet sind, ergibt. So werden üblicherweise 10 solcher Akkumulatorblöcke zur Realisierung eines 36-Volt-Batteriesystems hintereinander geschaltet und 13 ("Spar-Akku") oder 14 solcher Akkumulatorblöcke zur Realisierung eines 48-Volt-Batteriesystems hintereinander geschaltet. Je nach vorgesehenem Batteriesystem, d. h. nach nomineller Nennspannung der im Betriebszustand angeschlossenen Batterie, ist das Laden der Batterie mit unterschiedlichen Ladeparametern erforderlich. Entsprechend kann eine von der Batterie erhaltene Information als ein Parameter in der das Ladeprofil definierenden Funktion enthalten sein, über die zumindest einer der Ladeparameter durch die Steuereinrichtung festgelegt wird. Besonders bevorzugt wird über die Codierschnittstelle ein Maximalwert für den Ladestrom und/oder ein Nennwert für die Ladespannung, der einer Festlegung auf das Batterie-System entsprechen kann, und/oder eine an dem Ladeanschluss anliegende Hilfsspannung festgelegt. Durch die Codierung kann somit eine Festlegung der an dem Ladeanschluss ausgegebene Ladeparameter gezielt auf die im Betriebszustand angeschlossene Batterie erfolgen. So kann beispielsweise die Hilfsspannung als ein Ladeparameter festgelegt werden. Dabei ist zu berücksichtigen, dass Batterien existieren, bei denen eine Ladung nur durch das Beaufschlagen eines hierfür vorgesehenen Anschluss-Pols der Steckvorrichtung der Batterie mit Hilfsspannung ermöglicht ist. In einer Ausführungsform ist die Codierschnittstelle mit einer Auswertung des oben erläuterten Feedback-Signals in Abhängigkeit von dem ausgesandten Freischaltesignal und/oder mit der Sicherungseinrichtung gekoppelt. Durch das Koppeln mit dem Freischalte-Signal und dem empfangenen Feedback-Signal kann durch Freischalte- und Feedback-Signal ein bestimmter Batterietyp eines bestimmten Herstellers identifiziert werden, woraufhin das Ladeprofil mit den Ladeparametern direkt gezielt eingestellt werden kann. Durch das Koppeln mit der Sicherungseinrichtung kann auf besonders einfache und zuverlässige Weise das zur Ausgabe der Ladeleistung verwendete Ladeprofil mit seinen Ladeparametern direkt an die ausgewählte Steckeinrichtung angepasst sein, die mit einer korrespondierenden Steckvorrichtung in Verbindung gebracht ist, wodurch die Sicherungseinrichtung das Ausgeben von Ladeleistung an den übrigen Steckeinrichtungen verhindert.

In einer besonders bevorzugten Ausführungsform weist die Codierschnittstelle eine drahtlose Schnittstelle auf, die von außerhalb des Schutzschranks mit einer korrespondierenden drahtlosen Schnittstelle eines mobilen Endgeräts zugänglich ist zum Ermöglichen einer Programmierung von zumindest einem Ladeparameter mittels des mobilen Endgeräts. Hierdurch kann ein Nutzer der Ladestation das Ladeprofil, das die Art und Weise der Ausgabe der Ladeleistung an die Batterie bestimmt, nach seinen Wünschen programmieren. Die Codierschnittstelle kann insbesondere außerhalb des Schutzschranks angeordnet und drahtlos oder drahtgebunden mit dem Ladegerät verbunden sein. Besonders bevorzugt ist in dem mobilen Endgerät eine mit der Codierschnittstelle kompatible Software abgelegt, über die die Programmierung ermöglicht ist. Ein Nutzer der Ladestation kann somit auf seinem mobilen Endgerät ein Ladeprofil ablegen, mit dem er seine Batterie geladen haben möchte, und dies auf einfache Weise durch Übertragung des Ladeprofils über die Codierschnittstelle vorgeben. Besonders bevorzugt ist die Ladestation dazu ausgebildet, nach Abschluss eines Ladevorgangs, vor dem über das mobile Endgerät eine Programmierung vorgenommen wurde, in einen von der Programmierung unabhängigen vorprogrammierten Grundzustand mit definierten Ladeparametern bzw. gemäß in dem Ladegerät gespeicherten Ladeprofil zurückzukehren. Die Ladeeinrichtung ist somit bevorzugt dazu ausgebildet, das Programmieren über die Codierschnittstelle mittels eines mobilen Endgeräts zu erfassen und nach Beendigung des Ladevorgangs, der auf eine solche Programmierung erfolgt ist, zur voreingestellten Programmierung zurückzukehren. Entsprechend kann ein nachfolgender Nutzer der Ladestation auf eine vorprogrammierte Standard-Einstellung des Ladeprofils zurückgreifen und ist nicht gezwungen, der Programmierung zu folgen, die ein Nutzer vor ihm in der Steuereinrichtung abgelegt hat.

In einer Ausführungsform weist das Ladegerät eine Konverterschaltung und eine Primärspule und eine Sekundärspule auf, wobei an der Sekundärseite ein Gleichrichter vorgesehen ist und die Konverterschaltung dem Konvertieren einer an einen Versorgungsanschluss des Ladegeräts in dem Betriebszustand anliegenden Versorgungsspannung in eine in dem Betriebszustand an die ausgewählte Steckeinrichtung, insbesondere an dem beschriebenen Ausgangsanschluss des Ausgangsschaltkreises, vorgesehene Ladespannung dient. Der Gleichrichter dient der Realisierung einer Gleichspannung als Ladespannung, der üblicherweise zum Laden einer Batterie eine Gleichspannung benötigt wird. Die Erfinder haben festgestellt, dass eine bauraumoptimierte Ausgestaltung bzw. Anordnung von Elektronikbauteilen in dem Gehäuse dann besonders effektiv und verlustfrei ermöglicht ist, wenn in dem Ladegerät eine Konverterschaltung mit einer Primär- und einer Sekundärspule vorgesehen wird, die einen Spannungsteiler mit zwei parallelen Spannungsteilerarmen aufweist, wobei in der Konverterschaltung ein erstes aktives Schaltbauteil, das insbesondere als Transistor, insbesondere MOSFET, ausgebildet ist, vorgesehen ist und der Spannungsteiler mit seinen beiden parallelen Spannungsteilerarmen dem ersten aktiven Schaltbauteil nachgeschaltet ist und die Primärspule und in Reihe zu der Primärspule ein Speicherkondensartor in einem ersten der beiden Spannungsteilerarme vorgesehen ist und ein zweites aktives Schaltbauteil, das insbesondere als Transistor, insbesondere als MOSFET ausgebildet ist, in einem zweiten der Spannungsteilerarme vorgesehen ist, wobei die Steuereinrichtung zum Ansteuern der aktiven Schaltbauteile ausgebildet ist. Bevorzugt ist die Steuereinrichtung dazu ausgebildet, die aktiven Schaltbauteile mit einem Duty-Cycle und einer Arbeitsfrequenz anzusteuern. Der Duty-Cycle bestimmt dabei das Verhältnis zwischen der Zeitdauer, während derer das jeweilige aktive Schaltbauteil eingeschaltet ist und somit stromleitend ausgebildet ist, zu der Summe an Zeitdauern, die sich aus der Addition der Zeitdauer, während derer das jeweilige aktiven Schaltbauteil ausgeschaltet ist und somit stromsperrend ausgebildet ist, mit der Zeitdauer, während derer das jeweilige aktive Schaltbauteil eingeschaltet ist und somit stromleitend ausgebildet ist, ergibt. Die für die beiden Schaltbauteile vorgesehenen Duty-Cycle können in funktionaler Abhängigkeit zueinander stehen, beispielsweise identisch oder zueinander invertiert sein. Die Arbeitsfrequenz bezeichnet die Frequenz, mit der die Schaltbauteile geschaltet werden, wobei die Periodenlänge der Arbeitsfrequenz festgelegt ist durch die Zeitdauer zwischen zwei Einschaltvorgängen. Die Arbeitsfrequenz ist bevorzugt für beide Schaltbauteile identisch. Die Steuereinrichtung ist somit besonders bevorzugt so ausgestaltet, dass sie sowohl den Duty-Cycle als auch die Arbeitsfrequenz, mit der die Schaltbauteile geschaltet werden, in dem Betriebszustand festlegt. Besonders bevorzugt ist die Steuereinrichtung dazu ausgebildet, den Duty-Cycle zwischen einem Minimal-Duty-Cycle und einem Maximal-Duty-Cycle verändern zu können, wobei der Maximal-Duty-Cycle mindestens das Dreifache, insbesondere mindestens das Vierfache des Minimal-Duty-Cycle beträgt. Besonders bevorzugt ist die Steuereinrichtung dazu ausgebildet, durch Festlegen des Duty-Cycles die Ladespannung festzulegen und durch Festlegen der Arbeitsfrequenz den Ladestrom festzulegen. Als besonders vorteilhaft hat sich darüber hinaus herausgestellt, zwischen der Sekundärspule und dem Ausgangsanschluss einen Einweggleichrichter und somit keinen Zweiweggleichrichter vorzusehen, so dass somit nur jeweils über eine halbe Periodenlänge der von der Sekundärspule erzeugten Wechselspannung Energie von der Sekundärspule an den Ausgangsanschluss fließt. Das Vorsehen eines Einweggleichrichters hat sich als besonders vorteilhaft herausgestellt, um eine solche Rückkopplung des Sekundärkreises der Konverterschaltung mit dem Primärkreis der Konverterschaltung zu verhindern, die den resonanten Betrieb der Primärschaltung auf einen sehr geringen Duty-Cycle-Bereich beschränkt. Darüber hinaus ermöglicht das Vorsehen von nur einem Einweggleichrichter eine weitere Reduzierung der Herstellkosten. Dabei haben die Erfinder erkannt, dass mit dem beschriebenen besonders vorteilhaften Aufbau der Konverterschaltung des Ladegeräts hohe Stromflüsse in den Bauteilen, die zu einer zu hohen Wärmeentwicklung führen, vermieden werden können und Verluste reduziert werden können. Besonders bevorzugt ist die Steuereinrichtung dazu ausgebildet, den Duty-Cycle zu verändern, um die an dem Ausgangsanschluss ausgegebene Ladespannung zwischen einer Minimalspannung und einer Maximalspannung zu variieren bzw. an die in dem Betriebszustand an dem Ausgangsanschluss angeschlossene Batterie anzupassen. Die Anpassung der Ladespannung erfolgt bevorzugt, indem als Ladeparameter die Ladespannung vorgegeben wird, beispielsweise durch Auslesen der Batterie durch die Steuereinrichtung oder durch Vorgabe durch den Benutzer über die drahtlose Schnittstelle. Besonders bevorzugt ist die Steuereinrichtung dazu ausgebildet, die Ladespannung zwischen einer Minimalspannung und einer Maximalspannung anzupassen, wobei die Maximalspannung mindestens das Dreifache, insbesondere mindestens das Vierfache der Minimalspannung beträgt. Entsprechend ist die Steuereinrichtung dazu ausgebildet, in dem Betriebszustand ein Laden der Batterie mit jeweils an die Batterie angepasste Ladespannung zu gewährleisten, wobei je nach Typ der Batterie die Ladespannung über einen außergewöhnlich weiten Ladespannungsbereich hinweg angepasst werden kann. Besonders bevorzugt ist die Steuereinrichtung ferner dazu ausgebildet, die Arbeitsfrequenz zur Regelung des Ladestroms zu verändern. Besonders bevorzugt ist die Steuereinrichtung dazu ausgebildet, die Arbeitsfrequenz und den Duty-Cycle unabhängig voneinander zu verändern, so dass für unterschiedliche Duty-Cycle jeweils die Arbeitsfrequenz in einem Arbeitsfrequenzbereich einstellbar ist, wobei der Arbeitsfrequenzbereich bevorzugt zumindest eine Minimalfrequenz und eine Maximalfrequenz umfasst, wobei die Maximalfrequenz mindestens das Doppelte, insbesondere das Dreifache, insbesondere mindestens das Vierfache der Minimalfrequenz beträgt. In der besonders vorteilhaften Ausführungsform ist die Ladeeinrichtung somit dazu geeignet, in einem weiten Ladespannungs- und Ladestrombereich gezielt Ladeparameter für das Laden einer im Betriebszustand angeschlossenen Batterie zu setzen. Dabei hat sich insbesondere die beschriebene Topologie der Konverterschaltung als vorteilhaft herausgestellt. Gegenüber herkömmlichen Konverterschaltungen, die beispielsweise auf dem Flyback-Prinzip oder dem LLC-Prinzip beruhen, weist die erfindungsgemäße Konverterschaltung wesentliche Vorteile auf, da bei einer Spannungskonvertierung über einen weiten Ladespannungsbereich hinweg jeweils eine resonante Energieübertragung zwischen Primärseite mit Primärspule und Sekundseite mit Sekundärspule erreicht werden kann und darüber hinaus eine einfache und kostengünstige Struktur der Konverterschaltung gewährleistet ist und Strompeaks verhindert bzw. reduziert werden können.

In einer Ausführungsform ist der Ladestecker als ein in sich zusammenhängendes Bauteil mit genau einem Anschluss ausgebildet, an dem das Ladekabel angeschlossen ist. Bevorzugt weist der Ladestecker in sämtlichen Dimensionen eine Erstreckung von weniger als 30 cm, insbesondere weniger als 20 cm auf. Besonders bevorzugt weist der Ladestecker in einer horizontalen Ebene eine Längenerstreckung auf, die mindestens das Doppelte einer Längenerstreckung in einer senkrecht auf dieser horizontalen Ebene stehenden Richtung aufweist. Durch die beschriebenen Ausgestaltungen des Ladesteckers kann der Ladestecker besonders kompakt und einfach handhabbar ausgestaltet sein und gleichzeitig eine Vielzahl an unterschiedlichen Steckeinrichtungen ausbilden. Bevorzugt weist der Ladestecker in der genannten horizontalen Ebene in zumindest einer horizontalen Richtung eine Längenerstreckung von 10 cm bis 30 cm, bevorzugt 10 cm bis 20 cm auf, wobei er in der darauf senkrecht stehenden horizontalen Richtung in der horizontalen Ebene eine Erstreckung von weniger als 30 cm, bevorzugt weniger als 20 cm, bevorzugt weniger als 10 cm aufweist und in der senkrecht auf der horizontalen Ebene stehenden Richtung bevorzugt eine Erstreckung von weniger als 15 cm, insbesondere weniger als 10 cm aufweist. Die Erfinder haben erkannt, dass über die horizontale Ebene verteilt die verschiedenen Steckeinrichtungen in unterschiedliche horizontale Richtungen weisend angeordnet sein können, so dass in der horizontalen Ebene eine Vielzahl an Steckeinrichtungen realisierbar sind, während gleichzeitig die Erstreckung senkrecht zur horizontalen Ebene geringgehalten sein kann.

In einer Ausführungsform weist der Ladestecker einen Verteiler auf, der an das Ladekabel angeschlossen ist und von dem aus mehrere Kabelabschnitte zu jeweils einer der Steckeinrichtungen verlaufen. Der Verteiler kann den oben erläuterten, genau einen Anschluss des Ladesteckers ausbilden, mit dem er an das Ladekabel angeschlossen ist, sodass der Ladestecker nur über seinen Verteiler und somit den von dem Verteiler ausgebildeten Anschluss an das Ladekabel angeschlossen ist und hierdurch mit dem Ladegerät verbunden ist. Der Ladestecker weist mehrere Kabelabschnitte auf, wobei jeder der Kabelabschnitte jeweils eine der Steckeinrichtungen, die dem jeweiligen Kabelabschnitt zugeordnet ist, mit dem Verteiler verbindet. Über den jeweiligen zugeordneten Kabelabschnitt wird die Steckeinrichtung zur Durchführung eines Ladevorgangs von dem Ladegerät über das Ladekabel mit Ladeleistung versorgt. Ferner kann über den jeweiligen Kabelabschnitt die Steckeinrichtung über den Verteiler mit einem entsprechenden Freischaltesignal versorgt werden. Bevorzugt umfassen zumindest mehrere, insbesondere sämtliche der Kabelabschnitte jeweils drei Leiter, insbesondere nur drei Leiter, nämlich einen Phasenleiter, einen Nullleiter und einen Signalleiter des jeweiligen Kabelabschnitts, wobei diese Leiter des Kabelabschnitts Eigenschaften aufweisen können, die oben im Zusammenhang mit den Leitern des Ladekabels beschrieben sind. Die Steckeinrichtungen des Ladesteckers sind somit über die ihnen jeweils zugeordneten Kabelabschnitte und über den Verteiler an das Ladegerät angeschlossen. Besonders bevorzugt sind die Kabelabschnitte jeweils nach Art eines flexiblen Kabels mit einer Länge von mindestens 10 cm, insbesondere mindestens 20 cm ausgebildet. Besonders bevorzugt ist die oben erläuterte Sicherungseinrichtung zumindest teilweise in dem Verteiler und/oder in den Steckeinrichtungen integriert. In einer Ausführungsform ist in dem Ladestecker, insbesondere in dem Verteiler und/oder in zumindest einigen der Steckeinrichtungen, ein elektronisches Bauteil zum Erzeugen eines Freischaltesignals integriert. Hierdurch kann der Ladestecker selbst das jeweilige Freischaltesignal erzeugen, das für die jeweilige Steckeinrichtung erforderlich ist, die kompatibel zu einer ihr zugeordneten Batterie ausgebildet ist. Bevorzugt weist der Ladestecker ein solches, insbesondere möglicherweise auch mehrteilig ausgebildetes, elektronisches Bauteil auf, dass er für unterschiedliche seiner Steckeinrichtungen unterschiedliche Freischaltesignale ausgeben kann. Die Freischaltesignale können beispielsweise wie oben erläutert vorgesehen sein.In einer Ausführungsform ist der Ladestecker nach Art eines T-Stücks mit drei T-Enden ausgebildet, dessen eines T-Ende an das Ladekabel angeschlossen ist und dessen beide anderen T-Enden als zwei unterschiedliche Steckeinrichtungen ausgebildet sind. In einer Ausführungsform ist der Ladestecker nach Art eines Sterns mit zumindest drei SternEnden ausgebildet, die als jeweils unterschiedliche Steckeinrichtungen ausgebildet sind. Besonders bevorzugt weist der Stecker ein weiteres Stern-Ende auf, an dem das Ladekabel angeschlossen ist. Besonders bevorzugt sind die als unterschiedliche Steckeinrichtungen ausgebildeten SternEnden in einer Ebene verteilt angeordnet, die bevorzugt der obengenannten horizontalen Ebene entspricht. Besonders bevorzugt sind die Sternenden gleichmäßig verteilt um ein Sternzentrum angeordnet, bei Anordnung in der erläuterten horizontalen Ebene bevorzugt über einen selben Drehwinkel um eine senkrecht auf der horizontalen Ebene stehende, durch das Sternzentrum verlaufende Achse voneinander beabstandet. Durch die entsprechende Ausgestaltung des Ladesteckers kann der Ladestecker mit mehreren Steckeinrichtungen besonders kompakt und einfach handhabbar ausgestaltet sein.

In einer Ausführungsform weist die Ladestation eine Befestigungseinrichtung zum Halten des Ladesteckers an einem rohrförmigen Rahmenelement eines Fahrrads auf. Die Befestigungseinrichtung kann beispielsweise schlaufenförmig ausgebildet sein, beispielsweise nach Art einer offenen Schlaufe und somit nach Art eines Hakens oder nach Art einer lösbar geschlossenen Schlaufe, beispielsweise nach Art einer mittels Klettverschluss oder Knopf-Rastverschluss reversibel verschließbaren und öffenbaren Schlaufe. Bevorzugt ist die Schlaufenform dazu ausgebildet, um ein Rohr mit einem Durchmesser von bis zu 7 cm, insbesondere von bis zu 5 cm gelegt zu werden. Durch die Befestigungseinrichtung kann ein Gewicht des Ladesteckers an dem Rahmenelement des Fahrrads zumindest teilweise gehalten sein, so dass der Stecker auf Höhe seiner mit der Batterie verbundene Steckeinrichtung entlastet sein kann. Das Vorsehen einer solchen Befestigungseinrichtung hat sich gerade bei der erfindungsgemäßen Ladestation als besonders vorteilhaft herausgestellt, da aufgrund des Vorsehens einer Mehrzahl an unterschiedlichen Steckeinrichtungen der Ladestecker ein nicht unerhebliches Gewicht aufweisen kann. Die Befestigungseinrichtung ist bevorzugt werkzeuglos an einem rohrförmigen Rahmenelement befestigbar und von diesem lösbar, das sich senkrecht zur auf der Erde wirkenden Gewichtskraft erstreckt, wobei bei einer Befestigung der Befestigungseinrichtung an einem solchen Rahmenelement das Gewicht des Ladesteckers zumindest teilweise an diesem Rahmenelement abgestützt sein kann.

In einer Ausführungsform umschließt der Schutzschrank das Ladegerät dergestalt, dass das Ladegerät vor einer Entnahme aus dem Schutzschrank und somit vor Diebstahl geschützt ist. Bevorzugt umschließt der Schutzschrank das Ladegerät dergestalt, dass es vor einer Berührung und/oder vor Regen geschützt ist. Der Schutzschrank umgibt das Ladegerät somit bevorzugt zumindest bei einem bestimmungsgemäßen Aufstellen des Schutzschranks zumindest an der Oberseite und an zwischen Ober- und Unterseite umlaufenden Seiten, damit ein Auftreffen von Regen auf das Ladegerät und eine einfache Zugänglichkeit des Ladegeräts effektiv verhindert ist. Besonders bevorzugt umschließt der Schutzschrank das Ladegerät wasserdicht, insbesondere gemäß einer der oben erläuterten Normen.

In einer Ausführungsform umfasst die Ladestation einen Ständer für Zweiräder, der an einem Vertikalende Standfüße aufweist, über die er auf einem Boden aufstellbar, insbesondere in einem Boden verankerbar ist, und der sich von den Standfüßen in einer Vertikalrichtung über mindestens 50 cm erstreckt. Solche Ständer sind im Stand der Technik hinreichend bekannt, insbesondere als Fahrradständer, und ermöglichen ein zuverlässiges Anschließen der Zweiräder. Solche Ständer weisen bevorzugt eine zumindest bei bestimmungsgemäßem Aufstellen des Ständers vollständig geschlossene Öffnung auf, durch die hindurch ein Schloss durchführbar ist. Besonders bevorzugt weist der Ständer einen Rohrrahmen auf, der aus einem Rohr hergestellt ist, das einen Durchmesser von mindestens 2 cm aufweist. Besonders bevorzugt erstreckt sich der Ständer in allen Richtungen senkrecht zur Vertikalrichtung über eine Erstreckungslänge von über 2 cm. Hierdurch ist eine hinreichende Stabilität des Ständers und eine hinreichende Sicherheit bim Anschließen des Zweirads an den Ständer gewährleistet. Besonders bevorzugt weist der Ständer eine Erstreckung in einer senkrecht auf der Vertikalrichtung stehenden Längsrichtung von mindestens 1 m, insbesondere mindestens 1,5 m auf. Hierdurch kann eine zuverlässige Stütze des Zweirads beim Abstellen des Zweirads am Ständer gewährleistet sein. Besonders bevorzugt ist der Schutzschrank starr mit dem Ständer verbunden, und insbesondere ist der Schutzschrank ohne Öffnen des Schutzschranks nicht zerstörungsfrei von dem Ständer lösbar, wodurch Vandalismus effektiv vorgebeugt sein kann. Besonders bevorzugt erstreckt sich der Ständer in der Längsrichtung über mindestens 1 m, insbesondere mindestens 1,5 m über den Schutzschrank hinaus. Somit kann der Ständer ausgehend von dem Schutzschrank eine ausreichende Länge aufweisen, über die ein Zweirad an dem Ständer anlehnbar ist. Die beschriebene Öffnung, durch die hindurch das Fahrrad anschließbar ist, kann sich in diesem sich an den Schutzschrank anschließenden Längsbereich des Ständers befinden. Die Öffnung ist bevorzugt zumindest bei einer bestimmungsgemäßen Montage des Ständers, bei der er mit seinen Standfüßen auf einen Boden aufgestellt ist, insbesondere in einem Boden verankert ist, umfänglich vollständig und somit ununterbrochen geschlossen. Die Standfüße können beispielsweise Rollen umfassen oder Plattenelemente, die bestimmungsgemäß mittels Schrauben und/oder mittels Vergussmaterial, wie beispielsweise Beton, dauerhaft, bevorzugt nur unter Zerstörung lösbar, an einem Boden verankerbar sind.

In einer Ausführungsform umfasst die Ladestation eine Schließeinrichtung mit einem Aufnahmebereich zum Aufnehmen eines Rahmenrohrs eines Fahrrads. Die Schließeinrichtung ist dazu ausgebildet, in einem Offenzustand eine Einführbarkeit des Rahmenrohrs in ihren Aufnahmebereich zu gewährleisten und in einem Schließzustand ein Entnehmen des Rahmenrohrs aus dem Aufnahmebereich zu verhindern. Die Schließeinrichtung dient somit dem Anschließen des Fahrrads an den Ständer.

In einer Ausführungsform weist die Ladestation eine Halteeinrichtung zum Halten des Ladekabels in einem Bereitschaftszustand auf, in dem das Ladekabel eine weniger langgestreckte Form ausbildet als in dem Betriebszustand. Das Ladekabel hat eine Länge, mit der es sich von dem Ladegerät bis zum Ladestecker erstreckt. Nichtsdestotrotz kann das Ladekabel mit seiner Länge in unterschiedliche Formen gebracht werden, beispielsweise durch Aufwickeln. Indem die Halteeinrichtung dazu ausgebildet ist, das Ladekabel in einem Bereitschaftszustand zu halten, in dem es eine weniger langgestreckte Form als in dem Betriebszustand hat, wobei es in dem Betriebszustand bevorzugt im Wesentlichen ausgestreckt ist, kann die Halteeinrichtung einem kompakten Halten des Ladekabels dienen, wenn es nicht benutzt wird, was auch einer Beschädigung des Ladekabels und des Ladesteckers vorbeugen kann. In einer besonders einfachen Ausführungsform ist die Halteeinrichtung nach Art eines Auflagers ausgebildet, über das das Ladekabel in schlaufenförmig aufgewickeltem Zustand gehängt werden kann. In einer besonders bevorzugten Ausführungsform umfasst die Halteeinrichtung einen Aufrollmechanismus, der ein federbelastetes Aufrollen des Ladekabels ausgehend von dem Betriebszustand zum Erreichen des Bereitschaftszustands gewährleistet. Die Realisierung solcher Aufrollmechanismen ist hinreichend bekannt. Besonders bevorzugt ist ein solcher Aufrollmechanismus dergestalt ausgebildet, dass ausgehend von dem Bereitschaftszustand, in dem das Kabel mittels des Aufrollmechanismus an der Halteeinrichtung aufgerollt gehalten ist, unter Rotation des Aufrollmechanismus von der Halteeinrichtung abgerollt werden kann, indem die von dem Aufrollmechanismus vorgegebene Federkraft überschritten wird, wobei das Ladekabel in der gewünschten Länge abgerollt werden kann und der Aufrollmechanismus nach Beenden des Abrollvorgangs blockiert ist und erst durch eine Aktivierung, beispielsweise durch kurzes Ziehen am Ladekabel oder durch Betätigung eines Freigabeknopfs, aktivierbar ist. Durch einen solchen Aufrollmechanismus kann besonders zuverlässig sichergestellt sein, dass ein Nutzer nach dem Nutzen der Ladestation die Ladestation in den Bereitschaftszustand zurückführt, in dem das Ladekabel und der Ladestecker vordefiniert an der Halteeinrichtung gehalten sind. In einer besonders bevorzugten Ausführungsform ist die Schließeinrichtung dazu ausgebildet, ausgehend von ihrem Schließzustand nur bei Vorliegen des Bereitschaftszustands in ihren Offenzustand zu wechseln.

Dies bringt den besonderen Vorteil mit sich, dass ein Nutzer gezwungen ist, die Ladestation in den Bereitschaftszustand zurückzuführen, bevor er die Schließeinrichtung wieder öffnen kann.

In einer Ausführungsform umfasst die Ladestation eine Freigabeschaltung, wobei erst nach Betätigen der Freigabeschaltung der Betriebszustand zum Laden der Batterie erreichbar ist. Die Freigabeschaltung kann ein bewusstes Initiieren eines Ladevorgangs ermöglichen. Besonders bevorzugt ist die Freigabeschaltung von außerhalb des Schutzschranks betätigbar. In einer Ausführungsform ist die Freigabeschaltung mittels einer elektronischen Authentifizierung und/oder eines Bezahlvorgangs betätigbar. Über die Betätigung der Freigabeschaltung kann ermöglicht sein, dass der Betriebszustand zum Laden der Batterie erreichbar ist. Somit kann der Betriebszustand zum Laden der Batterie und somit zum Initiieren eines Ladevorgangs nach der Betätigung der Freigabeschaltung erfolgen. Eine elektronische Authentifizierung kann beispielsweise über eine Karte elektronisch erfolgen, beispielsweise über das Auslesen einer Karte, die mit einem Chip, einem Magnetstreifen und/oder einer NFC-Komponente versehen ist. Beispielsweise kann eine Authentifizierung über eine Kreditkarte oder Mitgliedskarte oder sonstige Identifikationskarte erfolgen. Beispielsweise kann die elektronische Authentifizierung auch über ein mobiles Endgerät, wie beispielsweise ein Smartphone, erfolgen, beispielsweise mittels einer auf dem Smartphone abgelegten App. Beispielsweise kann vorgesehen sein, dass der Betreiber der Ladestation eine App für ein mobiles Endgerät zur Verfügung stellt, über die die Freigabeschaltung betätigbar ist. Ein Betreiber kann daher die Nutzbarkeit seiner Ladestation von bestimmten Parametern abhängig machen, beispielsweise einer Mitgliedschaft oder sonstigen Aktivität, beispielsweise von der Inhaberschaft einer Treuekarte oder von der Durchführung einer bestimmten Aktivität, die er anderweitig anbietet, beispielsweise ein Restaurantbesuch, Supermarktbesuch, Museumsbesuch oder dergleichen. Die Betätigung mittels eines Bezahlvorgangs kann beispielsweise als Betätigung mittels Münzeinwurfs oder mittels elektronischer Zahlung vorgesehen sein. In einer Ausführungsform ist die Freigabeschaltung mittels einer mechanischen Schaltung betätigbar. Eine solche mechanische Schaltung ist besonders einfach bedienbar. Besonders bevorzugt ist die Freigabeschaltung über das Erreichen des Schließzustands der Schließeinrichtung betätigbar. Hierdurch kann sichergestellt sein, dass die Sicherung eines Zweirads vorgenommen wurde, bevor der Ladevorgang begonnen wird. Die Freigabeschaltung kann auch elektronische Mittel umfassen, beispielsweise Bilderfassungsmittel und/oder mit dem Ladestecker, der erläuterten Sicherungseinrichtung oder den erläuterten Steckeinrichtungen zusammenwirkende elektrische Schalter umfassen. Bei dem Vorsehen von Bilderfassungsmitteln kann besonders zuverlässig sichergestellt sein, dass nur bei einem als sinnvollen Ladewunsch äußernden erkannten Verhalten des Nutzers ein Ladevorgang initiiert wird.

Die Erfindung betrifft ferner eine Ladeeinrichtung, die geeignet ist, als Ladeeinrichtung einer erfindungsgemäßen Ladestation wie oben erläutert verwendet zu werden. Die Ladeeinrichtung ist zum Laden einer Batterie eines elektrisch angetriebenen Fahrzeugs, insbesondere eines E-Bikes, mit einer Ladeleistung von mindestens 80 W und einem Ladestrom von mindestens 2 A ausgebildet. Die Ladeeinrichtung ist somit dazu ausgebildet, einen Ladevorgang durchzuführen, bei dem eine Batterie mit einer Ladeleistung von mindestens 80 W und einem Ladestrom von mindestens 2 A geladen wird. Die Ladeeinrichtung umfasst ein Ladegerät und ein an das Ladegerät angeschlossenes Ladekabel, das an seinem von dem Ladegerät abgewandten Ende einen Ladestecker zum Anschließen des Ladegeräts an die Batterie aufweist. Der Ladestecker weist zumindest zwei Steckeinrichtungen auf, die jeweils eine andere Polanordnung aufweisen. Das Ladegerät ist dazu ausgebildet, in einem Betriebszustand zumindest wahlweise eine jede der Steckeinrichtungen mit Ladeleistung für einen Ladevorgang zu versorgen und dabei an vorgegebenen Polen der jeweiligen Polanordnung die Ladeleistung auszugeben, wobei insbesondere das Ladekabel eine Länge von mindestens 1 m, insbesondere mindestens 1,2 m aufweist. Erfindungsgemäß weist die Ladeeinrichtung eine Sicherungseinrichtung auf, die dazu ausgebildet ist, bei Anschließen einer bestimmten der Steckeinrichtungen an die Batterie zur Versorgung der Batterie mit der Ladeleistung eine Ausgabe von weiterer Ladeleistung an jedwede andere der Steckeinrichtungen zu verhindern und/oder bei Anschließen mehrerer der Steckeinrichtungen an jeweils eine ihnen zugeordnete Batterie zum Versorgen der jeweils zugeordneten Batterie mit Ladeleistung eine zwischen den Steckeinrichtungen fließende Leistung zu verhindern. Die Ladeeinrichtung kann in verschiedenen Ausführungsformen weitere Merkmale aufweisen, die aus den verschiedenen Ausführungsformen der oben erläuterten Ladestation ersichtlich sind.

Die Erfindung betrifft ferner ein Verfahren zum Laden einer Batterie eines elektrisch angetriebenen Fahrzeugs, insbesondere eines E-Bikes, mit einer Ladeleistung von mindestens 80 W und einem Ladestrom von mindestens 2 A. Bei dem erfindungsgemäßen Verfahren wird ein Ladestecker einer Ladestation an die Batterie angeschlossen, während der Ladestecker mit seinem Ladekabel mit der Ladestation verbunden ist. Nach Anschließen des Ladesteckers an die Batterie wird ein Ladevorgang gestartet. Bei dem erfindungsgemäßen Verfahren wird zum Anschließen des Ladesteckers eine zur Batterie passende Steckeinrichtung aus mehreren unterschiedlichen Steckeinrichtungen des Ladesteckers ausgewählt und die ausgewählte Steckeinrichtung an die Batterie angeschlossen wird und die Batterie mittels dieser Steckeinrichtung mit Ladeleistung versorgt wird. Durch eine Sicherungseinrichtung der Ladeeinrichtung wird eine Ausgabe von weiterer Ladeleistung an die anderen Steckeinrichtungen verhindert und/oder bei Anschließen mehrerer der Steckeinrichtungen an jeweils eine ihnen zugeordnete Batterie zum Versorgen der jeweils zugeordneten Batterie mit Ladeleistung eine zwischen den Steckeinrichtungen fließende Leistung verhindert, wobei insbesondere die Sicherungseinrichtung zumindest teilweise in dem Ladestecker integriert ist. Besonders bevorzugt wird vor dem Starten des Ladevorgangs, d.h. vor dem Ausgeben von Ladeleistung zum Laden der Batterie eine Abfolge an Freischaltesignalen von der ausgewählten Steckeinrichtung an die Batterie abgegeben, wobei insbesondere in Abhängigkeit von dem von der Batterie erhaltenen Feedback-Signal, das jeweils nach Aussenden des Freischaltesignals erhalten wird, zumindest ein Ladeparameter, insbesondere ein Ladeprofil mit Ladeparametern zum Laden der Batterie ausgewählt wird. In einer Ausführungsform wird die Sicherungseinrichtung betätigt, bevor der Ladevorgang gestartet wird. Die Sicherungseinrichtung kann wie oben erläutert ausgestaltet sein und entsprechend wie oben erläutert betätigt werden. Beispielsweise wird die Sicherungseinrichtung betätigt, indem ein Hülsenabschnitt der Sicherungseinrichtung relativ zu der Steckeinrichtung verschoben wird, die ausgewählt wird und auf die Batterie, d. h. die zu ihr korrespondierende Steckvorrichtung der Batterie, aufgesteckt wird.

Das erfindungsgemäße Verfahren kann in verschiedenen Ausführungsformen weitere Merkmale aufweisen, die dem Fachmann aus der Beschreibung der verschiedenen Ausführungsformen einer erfindungsgemäßen Ladestation und der Beschreibung gattungsgemäßer Ladestationen ersichtlich sind. Eine erfindungsgemäße Ladestation kann in verschiedenen Ausführungsformen Merkmale aufweisen, die dem Fachmann aus der obigen Beschreibung gattungsgemäßer Ladestationen und Ausführungsformen eines erfindungsgemäßen Verfahrens ersichtlich sind.

Die Erfindung wird nachfolgend unter Bezugnahme auf vier Figuren anhand von Ausführungsbeispielen näher erläutert.

Es zeigen:
- Figur 1:: in einer schematischen Prinzipdarstellung eine Ausführungsform einer erfindungsgemäßen Ladestation;
- Figur 2:: in einer schematischen Prinzipdarstellung eine detailliertere Ansicht auf Bestandteile der Ausführungsform gemäß Figur 1;
- Figur 3:: in einer schematischen Prinzipdarstellung einen Ladestecker einer Ausführungsform einer erfindungsgemäßen Ladestation;
- Figur 4:: in einer schematischen Prinzipdarstellung einen Ladestecker einer weiteren Ausführungsform einer erfindungsgemäßen Ladestation;
- Figur 5:: in einer schematischen Prinzipdarstellung einen Ladestecker einer weiteren Ausführungsform einer erfindungsgemäßen Ladestation.

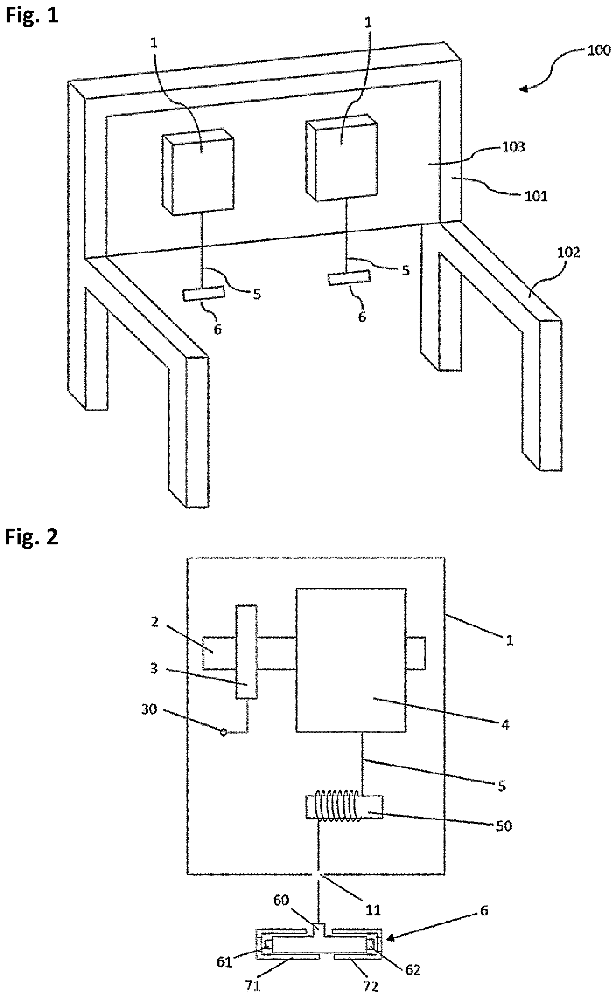

In Figur 1 ist in einer schematischen Prinzipdarstellung eine Ausführungsform einer erfindungsgemäßen Ladestation 100 stark vereinfacht dargestellt. Die Ladestation 100 umfasst einen Ständer, der einen Rohrrahmen umfasst. Ein erster Rohrrahmenabschnitt 101 ist U-förmig ausgebildet und bildet an seinen U-Schenkeln erste Standfüße aus, über die er bestimmungsgemäß in einem Boden zu verankern ist. Diese erste Rohrrahmenabschnitt 101 umschließt einen Wandabschnitt 103 des Ständers, an dem Schutzschränke 1 befestigt sind, aus denen Ladekabel 5 mit Ladesteckern 6 rausragen. Bei einer bestimmungsgemäßen Montage werden die U-Schenkel des ersten Rohrrahmenabschnitts 101 parallel zur auf der Erde wirkenden Gewichtskraft ausgerichtet mit ihren Standfüßen im Boden verankert. Von diesen U-Schenkeln erstreckt sich in einer Längsrichtung weg jeweils ein zweiter

Rohrahmenabschnitt 102. Die zweiten Rohrrahmenabschnitte 102 weisen jeweils einen weiteren Standfuß auf, über den sie bestimmungsgemäß in dem Boden verankert werden. Ausgehend von dem ersten Rohrrahmenabschnitt 101 erstrecken sich die zweiten Rohrrahmenabschnitte 102 jeweils über eine Länge von 1,2 m in Längsrichtung. Bei einer bestimmungsgemäßen Montage können somit an den zweiten Rohrrahmenabschnitten 102 Fahrräder angelehnt und an diesen angeschlossen werden. Die zweiten Rohrrahmenabschnitte 102 umschließen dabei gemeinsam mit dem Boden, auf dem der Ständer verankert ist, ununterbrochen eine Öffnung, durch die hindurch ein Fahrrad, wie bei Fahrradständern üblich, angeschlossen werden kann.

In Figur 2 ist in einer schematischen Prinzipdarstellung stark vereinfacht eine Ansicht auf verschiedene Komponenten der Ladestation 100 gemäß Figur 1 dargestellt. Dabei ist in Figur 2 rein schematisch die Rückwand eines Schutzschranks 1 dargestellt, an der ein Ladegerät 4 und ein Netzteil 3 der Ladestation 100 befestigt sind. Die Rückwand 1 weist eine Hutschiene 2 auf, an der das Netzteil 3 und das Ladegerät 4 befestigt sind. Das Netzteil 3 weist einen Versorgungsanschluss 30 auf, mit dem sie an einem Versorgungsnetz angeschlossen ist. Von dem Netzteil 3 geht ein Versorgungskabel zu einem Versorgungsanschluss 30 des Ladegeräts 4. Das Ladegerät 4 weist einen Ausgangsanschluss auf, an dem ein Ladekabel 5 angeschlossen ist. In dem Schutzschrank 1 ist ferner eine Halteeinrichtung 50 vorgesehen, die einen Aufrollmechanismus umfasst. In Figur 2 ist schematisch der Bereitschaftszustand abgebildet, in dem das Ladekabel 5 zu einem wesentlichen Teil mittels des Aufrollmechanismus auf der Halteeinrichtung 50 aufgerollt ist. Dabei erstreckt sich das Ladekabel 5 ausgehend von der Halteeinrichtung 50 durch eine in der Gehäusewandung des Schutzschranks 1 vorgesehene Öffnung 11 hindurch nach außen. An dem von dem Ladegerät 4 abgewandten Ende des Ladekabels 5 ist ein Ladestecker 6 angeordnet. Der Ladestecker 6 ist nach Art eines T-Stücks mit drei T-Enden ausgebildet. Eines seiner T-Enden bildet ein Anschlussende 60 aus, an dem das Ladekabel 5 angeschlossen ist. Die beiden anderen T-Enden bilden zwei unterschiedliche Steckeinrichtungen 61, 62 aus. Im Ladestecker 6 ist ferner eine Sicherungseinrichtung integriert, die zwei Hülsenabschnitte 71, 72 aufweist. In dem dargestellten Bereitschaftszustand erstrecken sich die Hülsenabschnitte 71, 72 axial entlang den Steckeinrichtungen 61, 62 und axial über diese hinaus und umschließen diese radial, was erfindungsgemäß allgemein vorteilhaft ist. In dem Bereitschaftszustand befinden sich beide Hülsenabschnitte 71, 72 in ihrer ersten Relativposition relativ zu den ihnen zugeordneten Steckeinrichtungen 61, 62, und somit befindet sich die Sicherungseinrichtung in ihrer ersten Position, bezogen auf jede der beiden Steckeinrichtungen 61, 62**.** Ausgehend von dem Bereitschaftszustand, der in Figur 2 dargestellt ist, kann der Betriebszustand erreicht werden, in dem eine der Steckeinrichtungen 61, 62 mit einer korrespondierenden Steckvorrichtung einer Batterie in Steckverbindung gebracht werden kann, indem der entsprechende Hülsenabschnitt 71, 72 axial relativ zu der ihm zugeordneten Steckeinrichtung 61, 62 verschoben wird zur Freigabe der jeweiligen Steckeinrichtung 61, 62. In diesem Betriebszustand befindet sich der verschobene Hülsenabschnitt 71, 72 in seiner oben erläuterten zweiten Relativposition relativ zu der ihm zugeordneten Steckeinrichtung 61, 62 und ist somit die ihm zugeordnete Steckeinrichtung 61, 62 auf eine korrespondierende Steckvorrichtung aufsteckbar, während sich der andere der Hülsenabschnitte 71, 72 relativ zu der ihm zugeordneten Steckeinrichtung 61, 62 in der ersten Relativposition befindet und durch den einen Hülsenabschnitt 71, 72 daran gehindert ist, seine zweite Relativposition relativ zu der ihm zugeordneten Steckeinrichtung 61, 62 einzunehmen.

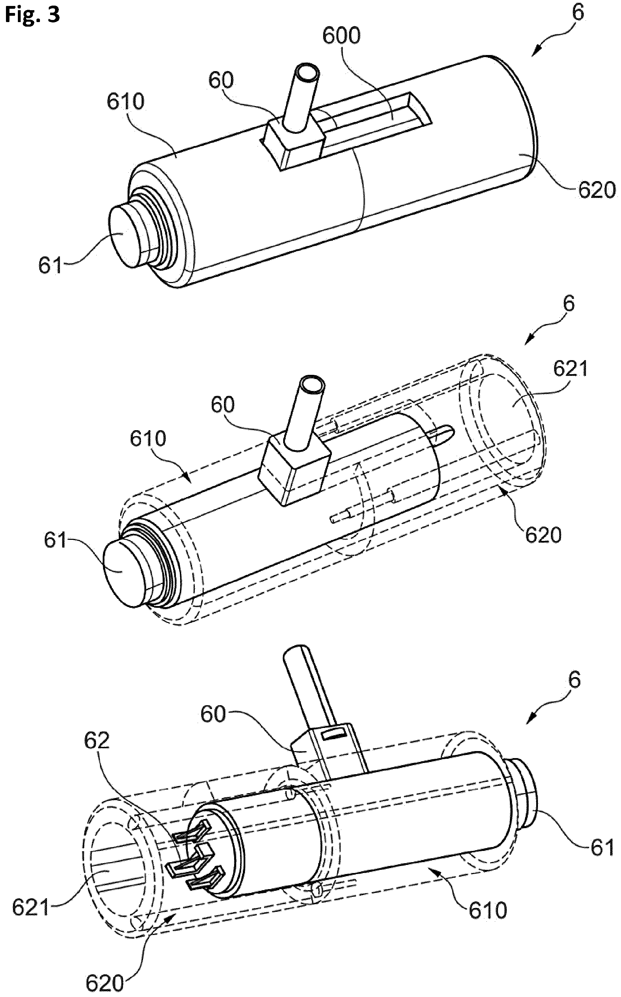

In Figur 3 ist in einer schematischen Prinzipdarstellung ein Ladestecker 6 einer Ausführungsform einer erfindungsgemäßen Ladestation 100 schematisch stark vereinfacht gezeigt. Der Ladestecker 6 ist nach Art eines T-Stücks mit drei T-Enden ausgebildet. Eines der T-Enden ist als Anschlussende 60 zum Anschließen an ein Ladekabel 5 ausgebildet, die beiden anderen T-Enden sind jeweils als Steckeinrichtungen 61, 62 ausgebildet. Der Ladestecker 6 umfasst eine als Hülse ausgebildete Sicherungseinrichtung, die aus zwei Hülsenabschnitten 610, 620 zusammengeschraubt ist. Die beiden Steckeinrichtungen 61, 62 sind starr miteinander verbunden und von der Hülse umgeben und entlang der Achse der Hülse in der Hülse verschiebbar aufgenommen. Die Verschiebbarkeit ist durch eine schlitzartige Öffnung 600 in der Hülse gewährleistet, durch die sich das als Anschlussende 60 ausgebildete T-Ende 60 hindurch erstreckt. In Figur 3 sind verschiedene Ansichten auf den Ladestecker 6 gezeigt, wobei die beiden unteren Ansichten teiltransparente Darstellungen von zwei verschiedenen Seiten des Ladesteckers 6 sind. Aus Figur 3 ist ersichtlich, dass in dem gezeigten Betriebszustand des Ladesteckers 6 die zweite Steckeinrichtung 62 von der Öffnung 621 des zweiten Hülsenabschnitts 620 nach innen versetzt angeordnet ist und somit nicht auf eine korrespondierende Steckvorrichtung aufsteckbar ist. Hingegen erstreckt sich die erste Steckeinrichtung 61 durch die Öffnung des ersten Hülsenabschnitts 610 hindurch nach außen, so dass die erste Steckeinrichtung 61 auf eine korrespondierende Steckvorrichtung aufsteckbar ist. Die Sicherungseinrichtung befindet sich im dargestellten Betriebszustand somit in der ersten Position relativ zur zweiten Steckeinrichtung 62 und in der zweiten Position relativ zur ersten Steckeinrichtung 61. Falls ein Nutzer statt der ersten Steckeinrichtung 61 die zweite Steckeinrichtung 62 mit einer korrespondierenden Batterie verbinden möchte, muss er lediglich durch Ergreifen des Anschlussendes 60 die starr miteinander verbundenen Steckeinrichtungen 61, 62 axial entlang der Hülsenachse so verschieben, dass die erste Steckeinrichtung 61 nach innen versetzt in dem ersten Hülsenabschnitt 610 angeordnet ist und die zweite Steckeinrichtung 62 axial außen über den zweiten Hülsenabschnitt 620 vorsteht.

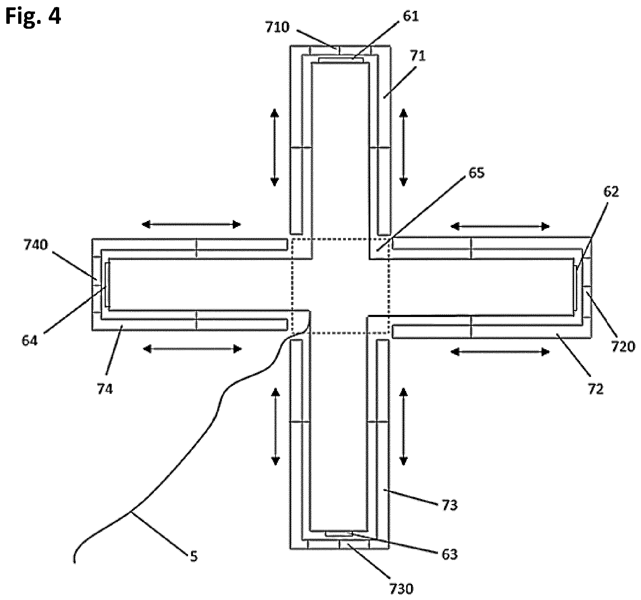

In Figur 4 ist in einer schematischen Prinzipdarstellung stark vereinfacht ein Ladestecker 6 einer weiteren Ausführungsform einer erfindungsgemäßen Ladestation 100 dargestellt. Der Ladestecker 6 ist nach Art eines Sterns mit vier Sternenden ausgebildet, die als jeweils unterschiedliche Steckeinrichtungen 61, 62, 63, 64 ausgebildet sind. An dem Ladestecker 6 und dabei in diesen integriert ist ferner eine Sicherungseinrichtung vorgesehen, die Hülsenabschnitte 71, 72, 73, 74 aufweist, die jeweils genau einer der Steckeinrichtungen 61, 62, 63, 64 zugeordnet sind und entlang ihren Hülsenabschnittsachsen, wie durch Pfeile in Figur 4 angedeutet, relativ zu der ihnen jeweils zugeordneten Steckeinrichtung 61, 62, 63, 64 verschiebbar sind. Im Sternzentrum ist im in Figur 4 gezeigten Zustand zwischen den Hülsenabschnitten 71, 72, 73, 74 ein Freiraum 65 vorgesehen. Innerhalb dieses Freiraums 65 ist das Ladekabel 5 hinter der Zeichenebene angeschlossen. Die Hülsenabschnitte 71, 72, 73, 74 weisen jeweils an ihren Enden eine Dichtungseinrichtung 710, 720, 730, 740 auf, mit der sie die zugeordnete Steckeinrichtung 61, 62, 63, 64 stirnseitig verdecken, solange sie sich jeweils in ihrer ersten Relativposition zu ihren zugeordneten Steckeinrichtungen 61, 62, 63, 64 befinden. In Figur 4 sind sämtliche vier Hülsenabschnitte 71, 72, 73, 74 in ihrer ersten Relativposition relativ zu den ihnen zugeordneten Steckeinrichtung 61, 62, 63, 64 dargestellt, die sie innehaben, wenn sich die Sicherungseinrichtung, die die Hülsenabschnitte 71, 72, 73, 74 umfasst, in ihrer ersten Position, bezogen auf sämtliche Steckeinrichtungen 61, 62, 63, 64, befindet. Das Vorsehen der Dichtungseinrichtungen 710, 720, 730, 740 an den beschriebenen Enden der Hülsenabschnitte 71, 72, 73, 74 ist allgemein vorteilhaft. Im vorliegenden Ausführungsbeispiel und allgemein vorteilhaft sind die Dichtungseinrichtungen 710, 720, 730, 740 scheibenartig ausgebildet und dichten die Hülsenabschnitte 71, 72, 73, 74 an ihren den Steckenden der jeweiligen Steckeinrichtungen 61, 62, 63, 64 zugeordneten Enden stirnseitig ab. Allgemein bevorzugt sind die Dichtungseinrichtungen 710, 720, 730, 740 nach Art einer geschlitzten Scheibe ausgebildet, die elastisch ist, so dass unter Spreizung des Schlitzes der Scheibe die jeweilige Steckeinrichtung 61, 62, 63, 64 durch die Dichtungseinrichtung 710, 720, 730, 740 hindurch axial aus dem jeweiligen Hülsenabschnitt 71, 72, 73, 74 hinaus bewegt werden kann. Aus Figur 4 ist ersichtlich, dass der Freiraum 65 besetzt wird, sobald einer der Hülsenabschnitte 71, 72, 73, 74 von seiner ersten Relativposition in seine zweite Relativposition relativ zu der zugeordneten Steckeinrichtung 61, 62, 63, 64 gebracht wird, in dem diese Steckeinrichtung 61, 62, 63, 64 auf eine korrespondierende Steckvorrichtung aufsteckbar ist. Die Hülsenabschnitte 71, 72, 73, 74 weisen hierzu gabelartige Sperrabschnitte auf, mit denen sie zwischen den Steckeinrichtungen 61, 62, 63, 64 verlaufen. Somit ist in diesem Zustand verhindert, dass die übrigen Hülsenabschnitte ebenfalls ihre zweite Relativposition einnehmen können. Entsprechend ist bei dem Ladestecker 6 gemäß Figur 4 gewährleistet, dass immer nur eine der Steckeinrichtungen 61, 62, 63, 64 zum Laden einer Batterie verwendet werden kann.

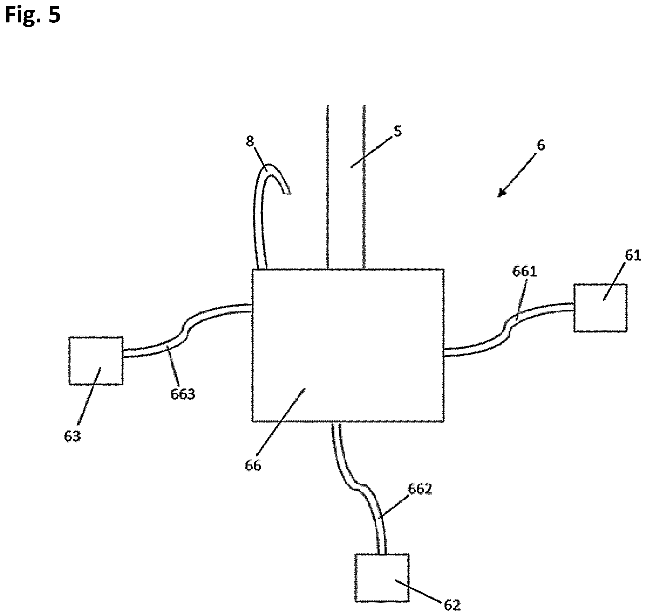

In Figur 5 ist in einer schematischen Prinzipdarstellung stark vereinfacht ein Ladestecker 6 einer weiteren Ausführungsform einer erfindungsgemäßen Ladestation 100 dargestellt. Der Ladestecker 6 umfasst einen Verteiler 66 sowie mehrere Kabelabschnitte 661, 662, 663. Der Ladestecker 6 ist in der erfindungsgemäßen Ladestation 100 über das Ladekabel 5 an das Ladegerät der Ladestation 100 angeschlossen. Die Steckeinrichtungen 61, 62, 63 des Ladesteckers 6 sind jeweils über einen ihnen zugeordneten der Kabelabschnitte 661,662, 663 an den Verteiler 66 angeschlossen. In dem Verteiler 66 sind, in Figur 5 der Einfachheit halber nicht dargestellt, elektronische Bauteile bzw. Komponenten des Ladesteckers 6 vorgesehen, über die die jeweiligen Kabelabschnitte 661, 662, 663 mit dem Ladekabel 5 und hierüber mit dem Ladegerät der Ladestation 100 verbunden sind. Diese elektronischen Bauteile bzw. Komponenten können beispielsweise Bestandteile einer Sicherungseinrichtung der Ladestation 100 und/oder elektronische Komponenten zum Erzeugen eines Freischaltesignals und/oder einfache elektrische Verteilerelemente umfassen bzw. sein, über die die Leiter des Ladekabels 5 mit Leitern der Kabelabschnitte 661, 662, 663 elektrisch leitend verbunden sind. Der Ladestecker 6 gemäß Figur 5 weist ferner eine Befestigungseinrichtung 8 zum Halten des Ladesteckers 6 an einem rohrförmigen Rahmenelement eines Fahrrads auf. Bei dem Ausführungsbeispiel gemäß Figur 5 ist die Befestigungseinrichtung 8 nach Art eines Metallhakens ausgebildet. In anderen bevorzugten Ausführungsformen kann die Befestigungseinrichtung beispielsweise eine nach Art eines Klettverschlusses ausgebildete schlaufenförmige Befestigungseinrichtung sein, mit der der Ladestecker 6 an einem rohrförmigen Rahmenelement eines Fahrrads befestigt werden kann. Die Befestigungseinrichtung 8 dient zur Zugentlastung der Verbindung zwischen Steckeinrichtung 61, 62, 63 und Batterie des Fahrrads während eines Ladevorgangs.

### Bezugszeichenliste

- 1: Schutzschrank
- 2: Hutschiene
- 3: Netzteil
- 4: Ladegerät
- 5: Ladekabel
- 6: Ladestecker
- 8: Befestigungseinrichtung
- 11: Öffnung
- 30: Versorgungsanschluss
- 50: Halteeinrichtung
- 60: Anschlussende
- 61: Steckeinrichtung
- 62: Steckeinrichtung
- 63: Steckeinrichtung
- 64: Steckeinrichtung
- 65: Freiraum
- 66: Verteiler
- 71: Hülsenabschnitt
- 72: Hülsenabschnitt
- 73: Hülsenabschnitt
- 74: Hülsenabschnitt
- 100: Ladestation
- 101: erster Rohrrahmenabschnitt
- 102: zweiter Rohrrahmenabschnitt
- 103: Wandabschnitt
- 600: schlitzartige Öffnung
- 610: Hülsenabschnitt
- 620: Hülsenabschnitt
- 621: Öffnung
- 661: Kabelabschnitt
- 662: Kabelabschnitt
- 663: Kabelabschnitt
- 710: Dichtungseinrichtung
- 720: Dichtungseinrichtung
- 730: Dichtungseinrichtung
- 740: Dichtungseinrichtung

## Patentansprüche

1. Ladestation (100) zum Laden einer Batterie eines elektrisch angetriebenen Fahrzeugs, insbesondere E-Bikes, in einem Ladevorgang mit einer Ladeleistung von mindestens 80 Watt und einem Ladestrom von mindestens 2 A, die Ladestation (100) umfassend einen Schutzschrank (1) und eine Ladeeinrichtung umfassend ein Ladegerät (4) und ein an das Ladegerät (4) angeschlossenes Ladekabel (5), das an seinem von dem Ladegerät (4) abgewandten Ende einen Ladestecker (6) zum Anschließen des Ladegeräts (4) an die Batterie aufweist, wobei das Ladegerät (4) in einem Innenraum des Schutzschranks (1) angeordnet ist und der Schutzschrank (1) eine Öffnung (11) aufweist, durch die das Ladekabel (5) aus dem Innenraum des Schutzschranks (1) austritt, wobei der Ladestecker (6) außerhalb des Innenraums des Schutzschranks (1) angeordnet ist, wobei der Ladestecker (6) zumindest zwei Steckeinrichtungen (61, 62) aufweist, die jeweils eine andere Polanordnung aufweisen, wobei das Ladegerät (4) dazu ausgebildet ist, in einem Betriebszustand zumindest wahlweise eine jede der Steckeinrichtungen (61, 62) mit Ladeleistung für einen Ladevorgang zu versorgen und dabei an vorgegebenen Polen der jeweiligen Polanordnung die Ladeleistung auszugeben, wobei insbesondere das Ladekabel (5) eine Länge von mindestens 1 m, insbesondere mindestens 1,2 m aufweist,
**dadurch gekennzeichnet, dass**
die Ladeeinrichtung eine Sicherungseinrichtung aufweist, die dazu ausgebildet ist, bei Anschließen einer bestimmten der Steckeinrichtungen (61, 62, 63, 64) an die Batterie zum Versorgen der Batterie mit der Ladeleistung eine Ausgabe von weiterer Ladeleistung an die anderen Steckeinrichtungen (61, 62, 63, 64) zu verhindern und/oder bei Anschließen mehrerer der Steckeinrichtungen (61, 62, 63, 64) an jeweils eine ihnen zugeordnete Batterie zum Versorgen der jeweils zugeordneten Batterie mit Ladeleistung eine zwischen den Steckeinrichtungen (61, 62, 63, 64) fließende Leistung zu verhindern, wobei insbesondere die Sicherungseinrichtung zumindest teilweise in dem Ladestecker (6) integriert ist.

2. Ladestation (100) nach Anspruch 1,
**dadurch gekennzeichnet, dass**
die Ladeeinrichtung dazu ausgebildet ist, vor Beginn des Ladevorgangs an der Polanordnung der jeweiligen Steckeinrichtung (61, 62) ein Freischaltesignal auszugeben und insbesondere ein Feedback-Signal der an die jeweilige Steckeinrichtung (61, 62) angeschlossenen Batterie auszulesen, wobei insbesondere das Ladegerät (4) zum Ausgeben unterschiedlicher Freischaltesignale ausgebildet ist.

3. Ladestation (100) nach einem der vorangehenden Ansprüche, **dadurch gekennzeichnet, dass**
die Sicherungseinrichtung zumindest teilweise als zu den Steckeinrichtungen (61, 62, 63, 64) bewegliches Bauteil in den Ladestecker (6) integriert ist und zu jeder der Steckeinrichtungen (61, 62, 63, 64) in eine erste Position bringbar ist, in der sie die jeweilige Steckeinrichtung (61, 62, 63, 64) zumindest teilweise verdeckt, und in eine zweite Position bringbar ist, in der sie die jeweilige Steckeinrichtung (61, 62, 63, 64) freigibt und dabei die übrigen Steckeinrichtungen (61, 62, 63, 64) zumindest teilweise verdeckt und deren Freigabe verhindert und/oder durch elektrische Schaltung die Ausgabe von Ladeleistung an den Polen der übrigen Steckeinrichtungen (61, 62, 63, 64) verhindert.

4. Ladestation (100) nach Anspruch 3,
**dadurch gekennzeichnet, dass**
die Sicherungseinrichtung mehrere Hülsenabschnitte (71, 72, 73, 74) aufweist, die jeweils genau einer der Steckeinrichtungen (61, 62, 63, 64) zugeordnet sind, wobei in der ersten Position der Sicherungseinrichtung zu einer jeden der Steckeinrichtungen (61, 62, 63, 64) der der jeweiligen Steckeinrichtung (61, 62, 63, 64) zugeordnete Hülsenabschnitt (71, 72, 73, 74) die jeweilige Steckeinrichtung (61, 62, 63, 64) umschließt und sich axial über die jeweilige Steckeinrichtung (61, 62, 63, 64) hinweg erstreckt, wobei ausgehend von der ersten Position zum Erreichen der zweiten Position der Sicherungseinrichtung mit Bezug auf die jeweilige Steckeinrichtung (61, 62, 63, 64) der Hülsenabschnitt (71, 72, 73, 74) relativ zu der jeweiligen Steckeinrichtung (61, 62, 63, 64) axial verschiebbar ist und er die übrigen Hülsenabschnitte (71, 72, 73, 74) auf ihre Relativposition zu den ihnen zugeordneten Steckeinrichtungen (61, 62, 63, 64) festlegt, die sie in der ersten Position der Sicherungseinrichtung, bezogen auf die ihnen jeweils zugeordneten Steckeinrichtungen (61, 62, 63, 64), innehaben.

5. Ladestation (100) nach einem der vorangehenden Ansprüche,
**dadurch gekennzeichnet, dass**
die Ladeeinrichtung einen einzigen Ausgangsschaltkreis umfasst, an dessen Ausgangsanschluss das Ladekabel (5) angeschlossen ist, wobei insbesondere zum Ausgeben der Ladeleistung an den Polen von zumindest mehreren der unterschiedlichen Steckeinrichtungen (61, 62, 63, 64) jeweils über dieselben Leiter des Ladekabels (5) elektrische Energie von dem Ausgangsanschluss an die Pole übertragen wird.

6. Ladestation (100) nach einem der vorangehenden Ansprüche, **dadurch gekennzeichnet, dass**
die Ladeeinrichtung eine elektronische Steuereinrichtung zur Festlegung von Ladeparametern aufweist, die ein im Betriebszustand an den Polen der Polanordnung der jeweiligen Steuereinrichtung ausgegebenes Ladepotential festlegen, wobei die Steuereinrichtung eine Codierschnittstelle aufweist, über die durch eine Codierung der Steuereinrichtung zumindest einer der Ladeparameter festlegbar ist, wobei insbesondere über die Codierschnittstelle ein Maximalwert für einen Ladestrom, ein Nennwert für eine Ladespannung und/oder eine an dem Ladeanschluss ausgegebene Hilfsspannung als Ladeparameter festlegbar ist.

7. Ladestation (100) nach Anspruch 6,
**dadurch gekennzeichnet, dass**
die Codierschnittstelle eine drahtlose Schnittstelle aufweist, die von außerhalb des Schutzschranks (1) mit einer korrespondierenden drahtlosen Schnittstelle eines mobilen Endgeräts zugänglich ist zum Ermöglichen einer Programmierung von zumindest einem Ladeparameter mittels des mobilen Endgeräts, wobei insbesondere in dem mobilen Endgerät eine mit der Codierschnittstelle kompatible Software abgelegt ist, über die die Programmierung ermöglicht ist, wobei insbesondere die Ladestation (100) dazu ausgebildet ist, nach Abschluss eines Ladevorgangs, vor dem über das mobile Endgerät eine Programmierung vorgenommen wurde, in einen von der Programmierung unabhängigen vorprogrammierten Grundzustand mit definierten Ladeparametern zurückzukehren.

8. Ladestation (100) nach einem der vorangehenden Ansprüche, **dadurch gekennzeichnet, dass**
der Ladestecker (6) als ein in sich zusammenhängendes Bauteil mit genau einem Anschluss ausgebildet ist, an dem das Ladekabel (5) angeschlossen ist, wobei insbesondere der Ladestecker (6) in sämtlichen Dimensionen eine Erstreckung von weniger als 30 cm, insbesondere weniger als 20 cm aufweist, wobei insbesondere der Ladestecker (6) in einer horizontalen Ebene eine Längenerstreckung aufweist, die mindestens das Doppelte einer Längenerstreckung in einer senkrecht auf dieser horizontalen Ebene stehenden Richtung aufweist.

9. Ladestation (100) nach einem der vorangehenden Ansprüche, **dadurch gekennzeichnet, dass**
der Ladestecker (6) einen Verteiler (66) aufweist, der an das Ladekabel (5) angeschlossen ist und von dem aus mehrere Kabelabschnitte (661, 662, 663) zu jeweils einer der Steckeinrichtungen (61, 62, 63) verlaufen, wobei die Steckeinrichtungen (61, 62, 63) über die ihnen jeweils zugeordneten Kabelabschnitte (661, 662, 663) und über den Verteiler (66) an das Ladegerät (4) angeschlossen sind.

10. Ladestation (100) nach einem der vorangehenden Ansprüche,
**dadurch gekennzeichnet, dass**
der Ladestecker (6) nach Art eines T-Stücks mit drei T-Enden (60) ausgebildet ist, dessen eines T-Ende (60) an das Ladekabel (5) angeschlossen ist und dessen beide anderen T-Enden (60) als zwei unterschiedliche Steckeinrichtungen (61, 62, 63, 64) ausgebildet sind, oder dass der Ladestecker (6) nach Art eines Sterns mit zumindest drei Stern-Enden ausgebildet ist, die als jeweils unterschiedliche Steckeinrichtungen (61, 62, 63, 64) ausgebildet sind, wobei insbesondere die als unterschiedliche Steckeinrichtungen (61, 62, 63, 64) ausgebildeten Stern-Enden in einer Ebene verteilt angeordnet sind.

11. Ladestation (100) nach einem der vorangehenden Ansprüche,
**dadurch gekennzeichnet, dass**
die Ladestation (100) eine insbesondere schlaufenförmige lösbare Befestigungseinrichtung zum Halten des Ladesteckers (6) an einem rohrförmigen Rahmenelement eines Fahrrads aufweist.

12. Ladestation (100) nach einem der vorangehenden Ansprüche,
**dadurch gekennzeichnet, dass**
der Schutzschrank (1) das Ladegerät (4) dergestalt umschließt, dass das Ladegerät (4) vor einer Entnahme aus dem Schutzschrank geschützt ist.

13. Ladestation (100) nach einem der vorangehenden Ansprüche,
**dadurch gekennzeichnet, dass**
die Ladestation (100) einen Ständer für Zweiräder umfasst, der an einem Vertikalende Standfüße aufweist, über die er auf einem Boden aufstellbar ist, und der sich von den Standfüßen in einer Vertikalrichtung über mindestens 50 cm erstreckt und in allen Richtungen senkrecht zur Vertikalrichtung eine Erstreckungslänge von über 2 cm aufweist, insbesondere eine Erstreckung in einer senkrecht auf der Vertikalrichtung stehenden Längsrichtung von mindestens 1 m, insbesondere mindestens 1,5 m aufweist, wobei insbesondere der Schutzschrank (1) starr mit dem Ständer verbunden ist und insbesondere ohne Öffnen des Schutzschranks (1) nicht zerstörungsfrei von dem Ständer lösbar ist, wobei insbesondere der Ständer sich in der Längsrichtung über mindestens 1 m, insbesondere mindestens 1,5 m über den Schutzschrank (1) hinaus erstreckt.

14. Ladestation (100) nach Anspruch 13,
**dadurch gekennzeichnet, dass**
die Ladestation (100) eine Schließeinrichtung mit einem Aufnahmebereich zum Aufnehmen eines Rahmenrohrs eines Fahrrads umfasst, die dazu ausgebildet ist, in einem Offenzustand eine Einführbarkeit des Rahmenrohrs in ihren Aufnahmebereich zu gewährleisten und in einem Schließzustand ein Entnehmen des Rahmenrohrs aus dem Aufnahmebereich zu verhindern.

15. Ladestation (100) nach einem der vorangehenden Ansprüche,
**dadurch gekennzeichnet, dass**
die Ladestation (100) eine Halteeinrichtung (50) zum Halten des Ladekabels (5) in einem Bereitschaftszustand aufweist, in dem das Ladekabel (5) eine weniger langgestreckte Form ausbildet als in dem Betriebszustand, wobei insbesondere die Halteeinrichtung (50) einen Aufrollmechanismus umfasst, wobei insbesondere die Schließeinrichtung dazu ausgebildet ist, ausgehend von ihrem Schließzustand nur bei Vorliegen des Bereitschaftszustands in ihren Offenzustand zu wechseln.

16. Ladestation (100) nach einem der vorangehenden Ansprüche,
**dadurch gekennzeichnet, dass**
die Ladestation (100) eine Freigabeschaltung umfasst, wobei erst nach Betätigen der Freigabeschaltung der Betriebszustand zum Laden der Batterie erreichbar ist, wobei die Freigabeschaltung insbesondere von außerhalb des Schutzschranks (1) betätigbar ist, insbesondere mittels einer elektronischen Authentifizierung und/oder eines Bezahlvorgangs betätigbar ist.

17. Ladeeinrichtung für eine Ladestation (100) nach einem der vorangehenden Ansprüche, wobei die Ladeeinrichtung für einen Ladevorgang zum Laden einer Batterie eines elektrisch angetriebenen Fahrzeugs, insbesondere E-Bikes, mit einer Ladeleistung von mindestens 80 Watt und einem Ladestrom von mindestens 2 A ausgebildet ist und ein Ladegerät (4) und ein an das Ladegerät (4) angeschlossenes Ladekabel (5) umfasst, das an seinem von dem Ladegerät (4) abgewandten Ende einen Ladestecker (6) zum Anschließen des Ladegeräts (4) an die Batterie aufweist, wobei der Ladestecker (6) zumindest zwei Steckeinrichtungen (61, 62) aufweist, die jeweils eine andere Polanordnung aufweisen, wobei das Ladegerät (4) dazu ausgebildet ist, in einem Betriebszustand zumindest wahlweise eine jede der Steckeinrichtungen (61, 62) mit Ladeleistung für einen Ladevorgang zu versorgen und dabei an vorgegebenen Polen der jeweiligen Polanordnung die Ladeleistung auszugeben, wobei insbesondere das Ladekabel (5) eine Länge von mindestens 1 m, insbesondere mindestens 1,2 m aufweist,
**dadurch gekennzeichnet, dass**
die Ladeeinrichtung eine Sicherungseinrichtung aufweist, die dazu ausgebildet ist, bei Anschließen einer bestimmten der Steckeinrichtungen (61, 62, 63, 64) an die Batterie zum Versorgen der Batterie mit der Ladeleistung eine Ausgabe von weiterer Ladeleistung an die anderen Steckeinrichtungen (61, 62, 63, 64) zu verhindern und/oder bei Anschließen mehrerer der Steckeinrichtungen (61, 62, 63, 64) an jeweils eine ihnen zugeordnete Batterie zum Versorgen der jeweils zugeordneten Batterie mit Ladeleistung eine zwischen den Steckeinrichtungen (61, 62, 63, 64) fließende Leistung zu verhindern, wobei insbesondere die Sicherungseinrichtung zumindest teilweise in dem Ladestecker (6) integriert ist.

18. Verfahren zum Laden einer Batterie eines elektrisch angetriebenen Fahrzeugs, insbesondere E-Bikes, mit einer Ladeleistung von mindestens 80 Watt und einem Ladestrom von mindestens 2 A, wobei ein Ladestecker (6) einer Ladestation (100) an die Batterie angeschlossen wird, während er mit seinem Ladekabel (5) mit der Ladestation (100) verbunden ist, und der Ladevorgang gestartet wird, wobei zum Anschließen des Ladesteckers (6) eine zur Batterie passende Steckeinrichtung (61, 62, 63, 64) aus mehreren unterschiedlichen Steckeinrichtungen (61, 62, 63, 64) des Ladesteckers (6) ausgewählt wird und die ausgewählte Steckeinrichtung (61, 62, 63, 64) an die Batterie angeschlossen wird und die Batterie mittels dieser Steckeinrichtung (61, 62, 63, 64) mit Ladeleistung versorgt wird,
**dadurch gekennzeichnet, dass**
durch eine Sicherungseinrichtung der Ladeeinrichtung eine Ausgabe von weiterer Ladeleistung an die anderen Steckeinrichtungen (61, 62, 63, 64) verhindert wird und/oder bei Anschließen mehrerer der Steckeinrichtungen (61, 62, 63, 64) an jeweils eine ihnen zugeordnete Batterie zum Versorgen der jeweils zugeordneten Batterie mit Ladeleistung eine zwischen den Steckeinrichtungen (61, 62, 63, 64) fließende Leistung verhindert wird, wobei insbesondere die Sicherungseinrichtung zumindest teilweise in dem Ladestecker (6) integriert ist.

## Claims

1. Charging station (100) for charging a battery of an electrically powered vehicle, in particular e-bikes, in a charging process with a charging power of at least 80 watts and a charging current of at least 2A, the charging station (100) comprising a protective cabinet (1) and a charging device with a charger (4) and a charging cable (5) connected to the charging device (4), which charging cable has a charging plug (6) at its end facing away from the charging device (4) for connecting the charging device (4) to the battery, wherein the charging device (4) is arranged in an interior space of the protective cabinet (1) and the protective cabinet (1) has an opening (11) through which the charging cable (5) exits from the interior of the protective cabinet (1), wherein the charging plug (6) is arranged outside the interior of the protective cabinet (1), wherein the charging plug (6) has at least two connector interfaces (61, 62), each of which has a different pole arrangement, wherein the charging device (4) is designed to at least selectively supply each of the connector interfaces (61, 62) with charging power for a charging process in an operating state and thereby to output the charging power at predetermined poles of the respective pole arrangement, wherein, in particular, the charging cable (5) has a length of at least 1 m, in particular at least 1.2 m,
**characterized in that**
the charging device has a safety device which is designed to prevent further charging power from being output to the other connector interfaces (61, 62, 63, 64) when connecting a specific one of the connector interfaces (61, 62, 63 64) to the battery for supplying the battery with charging power, and/or to prevent power flowing between the connector interfaces (61, 62, 63, 64) when connecting several of the connector interfaces (61, 62, 63, 64) to a battery assigned to them for supplying the assigned battery with charging power, wherein, in particular, the safety device is at least partially integrated in the charging plug (6).

2. Charging station (100) according to claim 1,
**characterized in that**
the charging device is designed to output an enable signal at the pole arrangement of the respective connector interface (61, 62) before the start of the charging process and, in particular, to read out a feedback signal from the battery connected to the respective connector interface (61, 62), wherein, in particular, the charging device (4) is designed to output different enable signals.

3. Charging station (100) according to any one of the preceding claims,
**characterized in that**
the safety device is at least partially integrated in the charging plug (6) as a component movable relative to the connector interfaces (61, 62, 63, 64) and can be moved relative to each of the connector interfaces (61, 62, 63, 64) into a first position in which it at least partially covers the respective connector interface (61, 62, 63, 64), and can be moved into a second position in which it exposes the respective connector interface (61, 62, 63, 64) and thereby covers the remaining connector interfaces (61, 62, 63, 64) at least partially and prevents them from being enabled and/or prevents the output of charging power at the poles of the remaining connector interfaces (61, 62, 63, 64) by means of electrical switching.

4. Charging station (100) according to claim 3,
**characterized in that**
the safety device comprises several sleeve sections (71, 72, 73, 74), each of which is assigned to exactly one of the connector interfaces (61, 62, 63, 64), wherein, in the first position of the safety device relative to each of the connector interfaces (61 62, 63, 64), the sleeve section (71, 72, 73, 74) assigned to the respective connector interface (61, 62, 63, 64) surrounds the respective connector interface (61, 62, 63, 64) and extends axially beyond the respective connector interface (61, 62, 63, 64), wherein, in order to reach the second position of the safety device with respect to the respective connector interface (61, 62, 63, 64), the sleeve section (71, 72, 73, 74) is axially displaceable relative to the respective connector interface (61, 62, 63, 64) from the first position and fixes the remaining sleeve sections (71, 72, 73, 74) at its relative position to the connector interfaces (61, 62, 63, 64) assigned to them, which position they occupy in the first position of the safety device with respect to the connector interfaces (61, 62, 63, 64) assigned to them.

5. Charging station (100) according to any one of the preceding claims,
**characterized in that**
the charging device comprises a single output circuit to the output connection of which the charging cable (5) is connected, wherein, in particular, for outputting the charging power at the poles of at least several of the different connector interfaces (61, 62, 63, 64), electrical energy is transmitted from the output connection to the poles in each case via the same conductors of the charging cable (5).

6. Charging station (100) according to any one of the preceding claims,
**characterized in that**
the charging device comprises an electronic control device for setting charging parameters which specify a charging potential output at the poles of the pole arrangement of the respective control device in the operating state, wherein the control device has a coding interface via which at least one of the charging parameters can be set by coding the control device, wherein a maximum value for a charging current, a nominal value for a charging voltage and/or an auxiliary voltage output at the charging connection can be set as charging parameters, in particular via the coding interface.

7. Charging station (100) according to claim 6,
**characterized in that**
the coding interface has a wireless interface which is accessible from outside the protective enclosure (1) by means of a corresponding wireless interface of a mobile terminal device to enable programming of at least one charging parameter by means of the mobile terminal device, wherein, in particular, software compatible with the coding interface is stored in the mobile terminal device and programming is enabled via said software, wherein, in particular, the charging station (100) is designed to return to a preprogrammed basic state with defined charging parameters that is independent of the programming, after the completion of a charging process that was preceded by programming via the mobile terminal device.

8. Charging station (100) according to any one of the preceding claims,
**characterized in that**
the charging plug (6) is designed as a coherent component with exactly one connection to which the charging cable (5) is connected, wherein, in particular, the charging plug (6) has an extension of less than 30 cm in all dimensions, in particular less than 20 cm, wherein, in particular, the charging plug (6) has a longitudinal extension in a horizontal plane that is at least twice the longitudinal extension in a direction perpendicular to this horizontal plane.

9. Charging station (100) according to any one of the preceding claims,
**characterized in that**
the charging plug (6) comprises a distributor (66) which is connected to the charging cable (5) and from which several cable sections (661, 662, 663) respectively run to one of the connector interfaces (61, 62, 63), wherein the connector interfaces (61, 62, 63) are connected to the charging device (4) via the cable sections (661, 662, 663) respectively assigned to them and via the distributor (66).

10. Charging station (100) according to any one of the preceding claims,
**characterized in that**
the charging plug (6) is designed in the manner of a T-piece with three T-ends (60), one T-end (60) of which is connected to the charging cable (5) and the other two T-ends (60) of which are designed as two different connector interfaces (61, 62, 63, 64), or that the charging plug (6) is designed in the manner of a star with at least three star ends which are designed as different connector interfaces (61, 62, 63, 64), wherein, in particular, the star ends designed as different connector interfaces (61, 62, 63, 64) are arranged distributed in one plane.

11. Charging station (100) according to any one of the preceding claims,
**characterized in that**
the charging station (100) has a releasable fastening device, in particular in the form of a loop, for holding the charging plug (6) on a tubular frame element of a bicycle.

12. Charging station (100) according to any one of the preceding claims,
**characterized in that**
the protective cabinet (1) encloses the charger (4) in such a way that the charger (4) is protected against removal from the protective cabinet.

13. Charging station (100) according to any one of the preceding claims,
**characterized in that**
the charging station (100) comprises a stand for two-wheeled vehicles, which stand has feet on a vertical end, via which it can be set up on a floor, and which extends from the feet in a vertical direction over at least 50 cm and has an extension length of more than 2 cm in all directions perpendicular to the vertical direction, in particular an extension in a longitudinal direction perpendicular to the vertical direction of at least 1 m, in particular at least 1.5 m, wherein, in particular, the protective cabinet (1) is rigidly connected to the stand and, in particular, cannot be removed from the stand without being destroyed without opening the protective cabinet (1), wherein, in particular, the stand extends in the longitudinal direction over at least 1 m, in particular at least 1.5 m, beyond the protective cabinet (1).

14. Charging station (100) according to claim 13,
**characterized in that**
the charging station (100) comprises a locking device with a receiving area for receiving a frame tube of a bicycle, which locking device is designed to ensure that the frame tube can be inserted into its receiving area in an open state and to prevent the frame tube from being removed from the receiving area in a closed state.

15. Charging station (100) according to any one of the preceding claims,
**characterized in that**
the charging station (100) has a holding device (50) for holding the charging cable (5) in a standby state in which the charging cable (5) has a less elongated shape than in the operating state, wherein, in particular, the holding device (50) comprises a winding mechanism, wherein, in particular, the closing device is designed to change from its closed state to its open state only when the standby state is present.

16. Charging station (100) according to any one of the preceding claims,
**characterized in that**
the charging station (100) comprises an enable circuit, wherein the operating state for charging the battery can only be achieved after the enable circuit has been actuated, wherein the enable circuit can be actuated in particular from outside the protective cabinet (1), in particular by means of electronic authentication and/or a payment process.

17. Charging device for a charging station (100) according to any one of the preceding claims, wherein the charging device is designed for a charging process for charging a battery of an electrically powered vehicle, in particular e-bikes, with a charging power of at least 80 watts and a charging current of at least 2 A, and comprises a charger (4) and a charging cable (5) connected to the charger (4), which charging cable has a charging plug (6) on its end facing away from the charger (4) for connecting the charger (4) to the battery, wherein the charging plug (6) has at least two connector interfaces (61, 62), each of which has a different pole arrangement, wherein the charger (4) is designed to supply at least one of each of the connector interfaces (61, 62) with charging power for a charging process in an operating state and to output the charging power at predetermined poles of the respective pole arrangement, wherein, in particular, the charging cable (5) has a length of at least 1 m, in particular at least 1.2 m,
**characterized in that**
the charging device has a safety device which is designed to prevent further charging power from being output to the other connector interfaces (61, 62, 63, 64) when connecting a specific one of the connector interfaces (61, 62, 63 64) to the battery for supplying the battery with charging power, and/or to prevent power flowing between the connector interfaces (61, 62, 63, 64) when connecting several of the connector interfaces (61, 62, 63, 64) to a battery assigned to them for supplying the assigned battery with charging power, wherein, in particular, the safety device is at least partially integrated in the charging plug (6).

18. Method for charging a battery of an electrically powered vehicle, in particular e-bikes, with a charging power of at least 80 watts and a charging current of at least 2A, wherein a charging plug (6) of a charging station (100) is connected to the battery while it is connected to the charging station (100) with its charging cable (5), and the charging process is started, wherein, for connecting the charging plug (6), a connector interface (61, 62, 63, 64) suitable for the battery is selected from several different connector interfaces (61, 62, 63, 64) of the charging plug (6) and the selected connector interface (61, 62, 63, 64) is connected to the battery and the battery is supplied with charging power by means of this connector interface (61, 62, 63, 64),
**characterized in that**
a safety device of the charging device prevents further charging power from being supplied to the other connector interfaces (61, 62, 63, 64) and/or, when several of the connector interfaces (61, 62, 63, 64) are connected to a battery assigned to each of them for supplying the respectively assigned battery with charging power, power flowing between the connector interfaces (61, 62, 63, 64) is prevented, wherein in particular the safety device is at least partially integrated in the charging plug (6).

## Revendications

1. Borne de recharge (100) pour recharger une batterie d'un véhicule à entraînement électrique, en particulier des vélos électriques, au cours d'un processus de recharge avec une puissance de recharge d'au moins 80 watts et un courant de recharge d'au moins 2 A, la station de recharge (100) comprenant une armoire de protection (1) et un dispositif de recharge avec un chargeur (4) et un câble de charge (5) raccordé au chargeur (4), câble qui présente, à son extrémité opposée au chargeur (4), une fiche de charge (6) pour raccorder le chargeur (4) à la batterie, le chargeur (4) étant disposé dans un espace intérieur de l'armoire de protection (1) et l'armoire de protection (1) présentant une ouverture (11) à travers laquelle le câble de charge (5) peut sortir de l'espace intérieur de l'armoire de protection (1), la fiche de charge (6) étant disposée à l'extérieur de l'espace intérieur de l'armoire de protection (1), la fiche de charge (6) comportant au moins deux interfaces de connecteur (61, 62) qui présentent chacune une disposition de pôles différente, le chargeur (4) étant conçu pour, dans un état de fonctionnement, alimenter au moins au choix chacune des interfaces de connecteur (61, 62) en puissance de charge pour un processus de charge et délivrer ainsi la puissance de charge aux pôles prédéfinis de la configuration de pôles correspondante, le câble de charge (5) présentant notamment une longueur d'au moins 1 m, en particulier d'au moins 1,2 m,
**caractérisée en ce que**
l'interface de connecteur comporte un dispositif de sécurité qui est conçu pour empêcher, lors du raccordement d'un interface de connecteur déterminé (61, 62, 63, 64) à la batterie pour alimenter la batterie avec la puissance de charge, une sortie de puissance de charge supplémentaire vers les autres interfaces de connecteur (61, 62, 63, 64) et/ou, lorsque plusieurs des interfaces de connecteur (61, 62, 63, 64) sont raccordées à une batterie qui leur est respectivement attribuée pour alimenter en puissance de charge la batterie respectivement attribuée, d'empêcher une puissance circulant entre les interfaces de connecteur (61, 62, 63, 64), le dispositif de sécurité étant notamment intégré au moins en partie dans la fiche de charge (6).

2. Borne de recharge (100) selon la revendication 1,
**caractérisée en ce que**
le dispositif de recharge est conçu pour, avant le début du processus de charge, émettre un signal de déverrouillage au niveau du disposition de pôles de l'interface de connecteur correspondante (61, 62) et, en particulier, pour lire un signal de retour de la batterie connectée à l'interface de connecteur respective (61, 62), le chargeur (4) étant en particulier conçu pour émettre différents signaux de déverrouillage.

3. Borne de recharge (100) selon l'une quelconque des revendications précédentes,
**caractérisée en ce que**
le dispositif de sécurité est intégré au moins en partie dans la fiche de charge (6) en tant que composant mobile par rapport aux interfaces de connecteur (61, 62, 63, 64) et peut être amené pour chacune des interfaces de connecteur (61, 62, 63, 64) dans une première position dans laquelle il recouvre au moins partiellement l'interface de connecteur correspondante (61, 62, 63, 64) et dans une deuxième position dans laquelle il libère l'interface de connecteur correspondante (61, 62, 63, 64) tout en recouvrant au moins partiellement les autres interface de connecteur (61, 62, 63, 64) et en empêchant leur déverrouillage et/ou en empêchant, par un circuit électrique, la délivrance de puissance de charge aux pôles des autres interfaces de connecteur (61, 62, 63, 64).

4. Borne de recharge (100) selon la revendication 3,
**caractérisée en ce que**
le dispositif de sécurité comprend plusieurs sections de manchon (71, 72, 73, 74), chacune étant associée à exactement une des interfaces de connecteur (61, 62, 63, 64), dans lequel, dans la première position du dispositif de sécurité par rapport à chacune des interfaces de connecteur (61, 62, 63, 64), la section de manchon (71, 72, 73, 74) affectée à l'interface de connecteur respective (61, 62, 63, 64) entoure l'interface de connecteur respective (61, 62, 63, 64) et s'étend axialement au-delà de l'interface de connecteur respective (61, 62, 63, 64), dans lequel, afin d'atteindre la deuxième position du dispositif de sécurité par rapport à l'interface de connecteur respective (61, 62, 63, 64), la section de manchon (71, 72, 73, 74) est déplaçable axialement par rapport à l'interface de connecteur respective (61, 62, 63, 64) à partir de la première position et fixe les sections de manchon restantes (71, 72, 73, 74) dans leur position relative par rapport aux interfaces de connexion (61, 62, 63, 64) qui leur sont attribuées, position qu'elles occupent dans la première position du dispositif de sécurité par rapport aux interfaces de connexion (61, 62, 63, 64) qui leur sont attribuées.

5. Borne de recharge (100) selon l'une quelconque des revendications précédentes,
**caractérisée en ce que**
le dispositif de recharge comprend un seul circuit de commutation de sortie, à la borne de sortie duquel est raccordé le câble de charge (5), l'énergie électrique étant transmise de la borne de sortie aux pôles, en particulier pour délivrer la puissance de charge aux pôles d'au moins plusieurs des différents interfaces de conducteur (61, 62, 63, 64), respectivement par l'intermédiaire des mêmes conducteurs du câble de charge (5).

6. Borne de recharge (100) selon l'une quelconque des revendications précédentes,
**caractérisée en ce que**
le dispositif de recharge comporte un dispositif de commande électronique pour définir des paramètres de charge qui définissent un potentiel de charge délivré à l'état de fonctionnement aux pôles de la disposition de pôles du dispositif de commande respectif, le dispositif de commande comportant une interface de codage qui permet de définir au moins l'un des paramètres de charge par un codage du dispositif de commande, une valeur maximale pour un courant de charge, une valeur nominale pour une tension de charge et/ou une tension auxiliaire émise au niveau du raccordement de charge pouvant être définies comme paramètres de charge, en particulier via l'interface de codage.

7. Borne de recharge (100) selon la revendication 6,
**caractérisée en ce que**
l'interface de codage comporte une interface sans fil accessible depuis l'extérieur de l'armoire de protection (1) avec une interface sans fil correspondante d'un terminal mobile afin de permettre la programmation d'au moins un paramètre de charge au moyen du terminal mobile, un logiciel compatible avec l'interface de codage étant notamment enregistré dans le terminal mobile qui permet la programmation, la station de charge (100) étant notamment conçue pour revenir, après la fin d'un processus de charge, avant qu'une programmation ait été effectuée via le terminal mobile, dans un état de base préprogrammé indépendant de la programmation avec des paramètres de charge définis.

8. Borne de recharge (100) selon l'une quelconque des revendications précédentes,
**caractérisée en ce que**
la fiche de charge (6) est conçue comme un composant cohérent avec exactement un raccordement auquel le câble de charge (5) est raccordé, la fiche de charge (6) présentant notamment dans toutes ses dimensions une longueur inférieure à 30 cm, en particulier inférieure à 20 cm, la fiche de charge (6) présentant en particulier, dans un plan horizontal, une longueur au moins double de sa longueur dans une direction perpendiculaire à ce plan horizontal.

9. Borne de recharge (100) selon l'une quelconque des revendications précédentes,
**caractérisée en ce que**
la fiche de recharge (6) comporte un distributeur (66) qui est raccordé au câble de recharge (5) et à partir duquel plusieurs sections de câble (661, 662, 663) s'étendent vers l'une des interfaces de connecteur (61, 62, 63), les interfaces de connecteur (61, 62, 63) étant raccordées au chargeur (4) par l'intermédiaire des sections de câble (661, 662, 663) qui leur sont respectivement attribuées et par l'intermédiaire du distributeur (66).

10. Borne de recharge (100) selon l'une quelconque des revendications précédentes,
**caractérisée en ce que**
la fiche de charge (6) est conçue à la manière d'une pièce en T avec trois extrémités en T (60), dont une extrémité en T (60) est raccordée au câble de charge (5) et dont les deux autres extrémités en T (60) sont conçues comme deux dispositifs d'enfichage différents (61, 62, 63), ou que la fiche de charge (6) est conçu à la manière d'une étoile avec au moins trois extrémités en étoile qui sont conçues comme des dispositifs d'enfichage différents (61, 62, 63, 64), les extrémités en étoile conçues comme des dispositifs d'enfichage différents (61, 62, 63, 64) étant réparties dans un plan.

11. Borne de recharge (100) selon l'une quelconque des revendications précédentes,
**caractérisée en ce que**
la borne de recharge (100) comporte un dispositif de fixation amovible, en particulier en forme de boucle, pour maintenir la fiche de charge (6) sur un élément de cadre tubulaire d'une bicyclette.

12. Borne de recharge (100) selon l'une quelconque des revendications précédentes,
**caractérisée en ce que**
l'armoire de protection (1) entoure le chargeur (4) de telle sorte que celui-ci est protégé contre tout retrait de l'armoire de protection.

13. Borne de recharge (100) selon l'une quelconque des revendications précédentes,
**caractérisée en ce que**
la station de recharge (100) comprend un support pour deux-roues qui présente, à une extrémité verticale, des pieds qui permettent de le poser sur un sol, et qui s'étend à partir des pieds dans une direction verticale sur au moins 50 cm et présente dans toutes les directions perpendiculaires à la direction verticale une longueur d'extension supérieure à 2 cm, en particulier une extension dans une direction longitudinale perpendiculaire à la direction verticale d'au moins 1 m, en particulier d'au moins 1,5 m, l'armoire de protection (1) étant reliée de manière rigide au support et ne pouvant notamment pas être retirée du support sans être détruite sans ouvrir l'armoire de protection (1), le support s'étendant notamment dans la direction longitudinale sur au moins 1 m, en particulier au moins 1,5 m, au-delà de l'armoire de protection (1).

14. Borne de recharge (100) selon la revendication 13,
**caractérisée en ce que**
la borne de recharge (100) comprend un dispositif de fermeture avec une zone de réception pour recevoir un tube de cadre d'une bicyclette, qui est conçu pour garantir, dans un état ouvert, l'insertion du tube de cadre dans sa zone de réception et, dans un état fermé, empêcher le retrait du tube de cadre de la zone de réception.

15. Borne de recharge (100) selon l'une quelconque des revendications précédentes,
**caractérisée en ce que**
la borne de recharge (100) comprend un dispositif de retenue (50) pour maintenir le câble de recharge (5) dans un état de veille dans lequel le câble de charge (5) présente une forme moins allongée qu'à l'état de fonctionnement, le dispositif de retenue (50) comprenant en particulier un mécanisme d'enroulement, le dispositif de fermeture étant en particulier conçu pour passer de son état fermé à son état ouvert uniquement lorsqu'il se trouve à l'état de veille.

16. Borne de charge (100) selon l'une quelconque des revendications précédentes,
**caractérisée en ce que**
la borne de charge (100) comprend un circuit de déverrouillage, l'état de fonctionnement pour charger la batterie n'étant accessible qu'après actionnement du circuit de déverrouillage, le circuit de déverrouillage pouvant être actionné en particulier depuis l'extérieur de l'armoire de protection (1), en particulier au moyen d'une authentification électronique et/ou d'un processus de paiement.

17. Dispositif de recharge pour une borne de charge (100) selon l'une des revendications précédentes, le dispositif de charge étant conçu pour une opération de charge destinée à charger une batterie d'un véhicule à entraînement électrique, en particulier des vélos électriques, avec une puissance de charge d'au moins 80 watts et un courant de charge d'au moins 2 A, et comprenant un chargeur (4) et un câble de charge (5) raccordé au chargeur (4), qui présente, à son extrémité opposée au chargeur (4), une fiche de charge (6) pour raccorder le chargeur (4) à la batterie, la fiche de charge (6) présentant au moins deux interfaces de connecteur (61, 62) qui présentent chacune une disposition de pôles différente, le chargeur (4) étant conçu pour, dans un état de fonctionnement, alimenter au moins au choix l'un de chacun des interfaces de connecteur (61, 62) avec une puissance de charge pour un processus de charge et de délivrer alors la puissance de charge aux pôles prédéfinis de la configuration polaire respective, le câble de charge (5) présentant en particulier une longueur d'au moins 1 m, en particulier d'au moins 1,2 m,
**caractérisé en ce que**
le dispositif de recharge comporte un dispositif de sécurité qui est conçu pour empêcher, lors du raccordement d'une interface de connecteur déterminée (61, 62, 63, 64) à la batterie pour alimenter la batterie avec la puissance de charge, une sortie de puissance de charge supplémentaire vers les autres interfaces de connecteur (61, 62, 63, 64) et/ou, lorsque plusieurs des interfaces de connecteur (61, 62, 63, 64) sont raccordés à une batterie qui leur est respectivement attribuée pour alimenter en puissance de charge la batterie respectivement attribuée, d'empêcher une puissance circulant entre les interfaces de connecteur (61, 62, 63, 64), le dispositif de sécurité étant notamment intégré au moins en partie dans la fiche de charge (6).

18. Procédé pour charger une batterie d'un véhicule à entraînement électrique, en particulier un vélo électrique, avec une puissance de charge d'au moins 80 watts et un courant de charge d'au moins 2 A, dans lequel une fiche de charge (6) d'une borne de recharge (100) est connectée à la batterie alors qu'elle est reliée à la borne de recharge (100) par son câble de charge (5) et le processus de charge est démarré, dans lequel, pour raccorder la fiche de charge (6) à la batterie, une interface de connecteur (61, 62, 63, 64) adapté à la batterie est sélectionné parmi plusieurs interfaces de connecteur différentes (61, 62, 63, 64) de la fiche de charge (6) et l'interface de connecteur sélectionnée (61, 62, 63, 64) est raccordée à la batterie et la batterie est alimentée en puissance de charge au moyen de cette interface de connecteur (61, 62, 63, 64),
**caractérisé en ce que**
un dispositif de sécurité du dispositif de charge empêche la délivrance d'une puissance de charge supplémentaire aux autres interfaces de connecteur (61, 62, 63, 64) et/ou, lorsque plusieurs des interfaces de connecteur (61, 62, 63, 64) sont connectées à une batterie qui leur est respectivement attribuée pour alimenter en puissance de charge la batterie respectivement attribuée, une puissance circulant entre les interface de connecteur (61, 62, 63, 64) est empêchée, le dispositif de sécurité étant en particulier intégré au moins en partie dans la fiche de charge (6).
